# EUROPEAN PATENT SPECIFICATION

(11) **EP 3 457 676 B1**
(45) Date of publication and mention of the grant of the patent: **04.11.2020**
(21) Application number: 18193350.8
(22) Date of filing: 10.09.2018
(51) Int. Cl.: H04M 11/02, H04N 7/18

(54) **LOBBY ENTRANCE SLAVE DEVICE, DOOR PHONE SYSTEM AND COMMUNICATION METHOD**
SLAVE-VORRICHTUNG EINES LOBBY-EINGANGS, TÜRSPRECHANLAGE UND KOMMUNIKATIONSVERFAHREN
DISPOSITIF ESCLAVE DE HALL D'ENTRÉE, SYSTÈME DE PORTIER TÉLÉPHONIQUE ET PROCÉDÉ DE COMMUNICATION

(30) Priority: 15.09.2017 JP 2017178055
(43) Date of publication of application: 20.03.2019
(73) Proprietor: Panasonic Intellectual Property Management Co., Ltd., Osaka-shi, Osaka 540-6207 (JP)
(72) Inventor: TERADA, Takashi, Osaka, 540-6207 (JP); YAMAMOTO, Takashi, Osaka, 540-6207 (JP); KUWAYAMA, Aiichirou, Osaka, 540-6207 (JP)
(74) Representative: Eisenführ Speiser

(56) References cited:
- EP-A1- 3 169 064
- EP-A2- 1 120 937
- DE-A1- 4 013 961
- ES-A1- 2 315 138

## Description

### BACKGROUND

### 1. Technical Field

The present disclosure relates to a lobby entrance slave device for a multi-dwelling house that performs digital communication, a door phone system including the lobby entrance slave device, and a communication method of the door phone system.

### 2. Description of the Related Art

DE 40 13 961 A1 discloses a telephone system for a network shared between a plurality of user units in a building. An exchange in each user unit is coupled in a star arrangement to a common bus construction, public telephone network connections and telephones. According to appropriate command signals a control unit in the exchange makes the appropriate connections, so that it is possible to connect with the public telephone network, with a common door station or with the exchange of another user in the building. This enables multiple telephones in a building to be connected to each other or to the public network using a single system, which is meant to be inexpensive, simple to install and to allow more users to be easily added.

EP 3 169 064 A1 discloses an intercom system and a communication method thereof. A connection status detector of a controller determines that a two-wire cable is forward connected, in a case where a synchronization pattern of reception data completely coincides with a synchronization pattern for forward connection check. The connection status detector determines that the two-wire cable is reversely connected, in a case where the synchronization pattern of reception data completely coincides with a synchronization pattern for reverse connection check. A transmission data inverter reverses an uplink signal output from a transmission data processor, in a case where it is determined that the two-wire cable is reversely connected. A reception data inverter reverses a downlink signal output from a reception driver, in a case where it is determined that the two-wire cable is reversely connected.

EP 1 120 937 A2 discloses a communication installation system which has a base communication unit coupled via respective communication lines to a number of room communication units in a star configuration. The base communication unit has a number of inputs for audio/video signals, telephone signals, EDV services and antenna signals, each room communication unit having an input/output for connection to the base communication unit and an audio/video connection, a telephone connection, a local network connection and/or a connection for a building technical system network.

ES 2 315 138 A1 provides a video door entry system with power, audio, video and data transmission on two-wire lines. It has one or more street panels connectable to a plurality of housing terminals. In the corresponding connection, only two non-polarized wires are used at all points of the installation, at least feeding through them, two audio channels, a video channel and a bidirectional data channel; a carrier frequency is used in each of these channels and the corresponding signals are transmitted with a frequency modulation.

In general, in a door phone system, for low cost and simple installation, an entrance slave device and an indoor monitor master device are connected to each other by a two-wire cable. In a detached house, a door phone system that enables a high image quality of a video by transmitting and receiving a large amount of data in a digital communication type between the entrance slave device and an indoor monitor master device which are connected to each other by the two-wire cable, is beginning to spread.

In a multi-dwelling housing, such as an apartment, an analog communication type door phone system is mainstream (refer to Japanese Patent Unexamined Publication No. 2010-239543). In such a door phone system, the two-wire cable is wired in a star shape such that one lobby entrance slave device is connected to each of the indoor monitor master devices. The lobby entrance slave device switches the two-wire cable by a mechanical (hardware) switch and performs analog communication with a specific indoor monitor master device.

Now, it is considered that switchover from an analog communication type to a digital communication type proceeds even in the door phone system for the multi-dwelling housing. Japanese Patent Unexamined Publication No. 2009-152896 discloses a digital communication type door phone system for a multi-dwelling housing in which a lobby entrance slave device (lobby interphone) and an indoor monitor master device (intercom master device) are wired in a daisy chain manner so as to be connected to each other via a distributor.

When switching the door phone system for a multi-dwelling house from the analog communication type to the digital communication type, it is desirable to replace only the device (the lobby entrance slave device and the indoor monitor) leaving the existing two-wire cable wired in a star shape.

However, there has not been disclosed a digital communication type door phone system for a multi-dwelling house that can utilize the existing two-wire cable wired in a star shape. In addition, the lobby entrance slave device described in Japanese Patent Unexamined Publication No. 2009-152896 cannot be applied to the door phone system of the star-shaped wiring since a mechanical (hardware) switch is not provided.

### SUMMARY

An object of the disclosure is to provide a lobby entrance slave device for a multi-dwelling house that can perform digital communication with an indoor monitor master device by utilizing an existing two-wire cable wired in a star shape, a door phone system including the lobby entrance slave device, and a communication method of the door phone system.

According to the disclosure, there is provided a lobby entrance slave device of a door phone system for a multi-dwelling house that performs digital communication with each of a plurality of indoor monitor master devices, including: a plurality of terminals connected to any of the plurality of indoor monitor master devices via a two-wire cable wired in a star shape; a controller that selects a called destination indoor monitor master device as a communication partner in a case of inputting a signal indicating the called destination indoor monitor master device, and generates a connection request; a cable selection connector that is to be connected to the terminal connected to the indoor monitor master device of the communication partner in accordance with the selection of the controller; and a transmitter that transmits the connection request to the indoor monitor master device of the communication partner via the cable selection connector and the two-wire cable.

According to the disclosure, there is provided a door phone system for a multi-dwelling house in which the lobby entrance slave device performs digital communication with each of a plurality of indoor monitor master devices via a two-wire cable wired in a star shape, in which the lobby entrance slave device opens a communication path with a called destination indoor monitor master device in a case where a signal indicating the called destination indoor monitor master device is input, and starts synchronous communication between the lobby entrance slave device and the called destination indoor monitor master device.

According to the disclosure, there is provided a communication method of a door phone system for a multi-dwelling house in which the lobby entrance slave device performs digital communication with each of a plurality of indoor monitor master devices via a two-wire cable wired in a star shape, the method including: by the lobby entrance slave device, opening a communication path with a called destination indoor monitor master device in a case where a signal indicating the called destination indoor monitor master device is input; and starting synchronous communication between the lobby entrance slave device and the called destination indoor monitor master device.

According to the disclosure, in a digital communication type door phone system for a multi-dwelling house, it is possible to perform digital communication between a lobby entrance slave device and an indoor monitor master device by utilizing an existing two-wire cable wired in a star shape.

### BRIEF DESCRIPTION OF THE DRAWINGS

FIG. 1 is a system configuration view illustrating a configuration of a door phone system according to Embodiment 1 of the disclosure;
FIG. 2A is a frame configuration view illustrating a frame configuration and a time slot configuration according to Embodiment 1 of the disclosure;
FIG. 2B is a view illustrating a field configuration of control data according to Embodiment 1 of the disclosure;
FIG. 2C is a view illustrating an example of a pattern of a reserve field of control data according to Embodiment 1 of the disclosure;
FIG. 2D is a view illustrating a field configuration of an interrupt signal according to Embodiment 1 of the disclosure;
FIG. 2E is a view illustrating an example of a pattern of a data field of the interrupt signal according to Embodiment 1 of the disclosure;
FIG. 2F is a view illustrating a configuration of a control slot according to Embodiment 1 of the disclosure;
FIG. 2G is a view illustrating an example of the pattern of the control slot distinction data field according to Embodiment 1 of the disclosure;
FIG. 2H is a view illustrating a configuration of a slot in which connection request data according to Embodiment 1 of the disclosure is mounted;
FIG. 2I is a view illustrating a configuration of a slot in which connection request confirmation data according to Embodiment 1 of the disclosure is mounted;
FIG. 3 is a block diagram illustrating a configuration of a lobby entrance slave device according to Embodiment 1 of the disclosure;
FIG. 4 is a block diagram illustrating an internal configuration of a cable selection connector of a lobby entrance slave device according to Embodiment 1 of the disclosure;
FIG. 5 is a block diagram illustrating a configuration of an indoor monitor master device according to Embodiment 1 of the disclosure;
FIG. 6 is a block diagram illustrating a configuration of a door-front lobby entrance slave device according to Embodiment 1 of the disclosure;
FIG. 7 is a view illustrating an example of preamble data used in Embodiment 1 of the disclosure;
FIG. 8 is a block diagram illustrating an internal configuration of a received data processor of the lobby entrance slave device according to Embodiment 1 of the disclosure;
FIG. 9 is a view illustrating an example of synchronization detection processing of the lobby entrance slave device according to Embodiment 1 of the disclosure;
FIG. 10 is a view for describing detection of a unique pattern of the lobby entrance slave device according to Embodiment 1 of the disclosure;
FIG. 11 is a flowchart illustrating an example of an operation of inversion detection processing of a two-wire cable according to Embodiment 1 of the disclosure;
FIG. 12 is a sequence diagram (connection success) of synchronization type connection processing according to Embodiment 1 of the disclosure;
FIG. 13 is a sequence diagram (connection failure) of the synchronization type connection processing according to Embodiment 1 of the disclosure;
FIG. 14 is a sequence diagram (connection success) of asynchronization type connection processing according to Embodiment 1 of the disclosure;
FIG. 15 is a sequence diagram (connection failure) of the asynchronization type connection processing according to Embodiment 1 of the disclosure;
FIG. 16 is a flowchart of the connection processing in the lobby entrance slave device according to Embodiment 1 of the disclosure;
FIG. 17 is a flowchart of the connection processing in the indoor monitor master device according to Embodiment 1 of the disclosure;
FIG. 18 is a view for describing a time difference of a prescribed number of frames due to a difference in crystal oscillation frequency according to Embodiment 1 of the disclosure;
FIG. 19 is a block diagram illustrating an internal configuration of a crystal oscillation frequency controller of an entrance slave device according to Embodiment 1 of the disclosure;
FIG. 20 is a block diagram illustrating an internal configuration of a crystal oscillator of the entrance slave device according to Embodiment 1 of the disclosure;
FIG. 21 is a schematic view illustrating an aspect in a case where the two-wire cable is positively connected;
FIG. 22 is a first schematic view illustrating an aspect in a case where the two-wire cable is reversely connected;
FIG. 23 is a second schematic view illustrating an aspect in a case where the two-wire cable is reversely connected;
FIG. 24 is a third schematic view illustrating an aspect in a case where the two-wire cable is reversely connected;
FIG. 25 is a fourth schematic view illustrating an aspect in a case where the two-wire cable is reversely connected;
FIG. 26 is a fifth schematic view illustrating an aspect in a case where the two-wire cable is reversely connected;
FIG. 27 is a block diagram illustrating an internal configuration of a data reproducer of the lobby entrance slave device according to Embodiment 1 of the disclosure;
FIG. 28 is a view illustrating time slot allocation in a basic communication frame according to Embodiment 1 of the disclosure;
FIG. 29 is a block diagram illustrating a configuration of a lobby entrance slave device according to Embodiment 2 of the disclosure;
FIG. 30 is a block diagram illustrating an internal configuration of a cable selection connector of the lobby entrance slave device according to Embodiment 2 of the disclosure;
FIG. 31 is a block diagram illustrating a configuration of an indoor monitor master device according to Embodiment 2 of the disclosure; and
FIG. 32 is a block diagram illustrating an internal configuration of a cable selection connector of the indoor monitor master device according to Embodiment 2 of the disclosure.

### DETAILED DESCRIPTION

Hereinafter, with reference to appropriate drawings, embodiments of the disclosure will be described in detail by using the drawings. However, there is a case where the detailed description more than necessary is omitted. For example, there is a case where detailed descriptions of already well-known matters and redundant descriptions on substantially the same configuration are omitted. This is to avoid the unnecessary redundancy in the following description and to make it easy for those skilled in the art to understand.

In addition, the attached drawings and the following description are provided in order to enable those skilled in the art to fully understand the disclosure, and are not intended to limit the subject matter described in the claims.

### Embodiment 1

### Outline of System

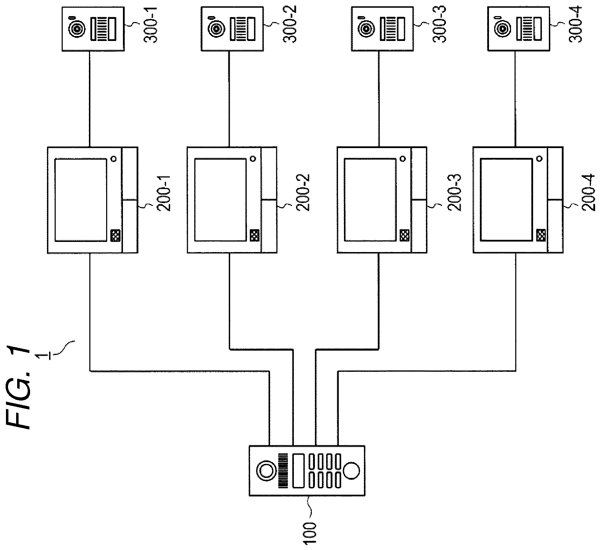

First, an outline of a door phone system according to an embodiment of the disclosure will be described with reference to FIG. 1. As illustrated in FIG. 1, door phone system 1 includes lobby entrance slave device 100, N (N is a plural number, N = 4 in FIG. 1) pieces of indoor monitor master devices 200-1 to 200-N, and N pieces of door-front entrance slave devices 300-1 to N. Lobby entrance slave device 100 is a device used by a visitor of a multi-dwelling house to call a resident of a visit place, and for example, is installed in a common entrance (lobby) on the first floor of a multi-dwelling house building. Indoor monitor master device 200 is a device for a resident to respond by receiving a call from a visitor, and is installed in each room (or each dwelling unit). Door-front entrance slave device 300 is a device used by a visitor of a multi-dwelling house to call a resident from the entrance of the visiting place and is installed outside (each entrance) each room (or each dwelling unit).

Lobby entrance slave device 100 is connected to each of the N pieces of indoor monitor master devices 200 in a star-shaped wiring via a two-wire cable. Indoor monitor master devices 200 in each of the rooms are connected to door-front entrance slave device 300 one to one via the two-wire cable.

Lobby entrance slave device 100 transmits a video signal and an audio signal to indoor monitor master device 200 of a communication partner. Door-front entrance slave device 300 transmits a video signal and an audio signal to indoor monitor master device 200 connected thereto.

Each indoor monitor master device 200 transmits the audio signal to lobby entrance slave device 100 and door-front entrance slave device 300. In addition, each indoor monitor master device 200 controls cameras of lobby entrance slave device 100 and door-front entrance slave device 300.

In addition, in the following description, a direction from lobby entrance slave device 100 to indoor monitor master device 200 and a direction from door-front entrance slave device 300 to indoor monitor master device 200 are referred to as "uplink direction", and packets and signals transmitted in the uplink direction are respectively referred to as "uplink packet" and "uplink signal". Further, a direction from indoor monitor master device 200 to lobby entrance slave device 100 and a direction from indoor monitor master device 200 to door-front entrance slave device 300 are referred to as "downlink direction", and packets and signals transmitted in the downlink direction are respectively referred to as "downlink packet" and "downlink signal".

### Frame Configuration at Time of Synchronous Communication and Time Slot Configuration

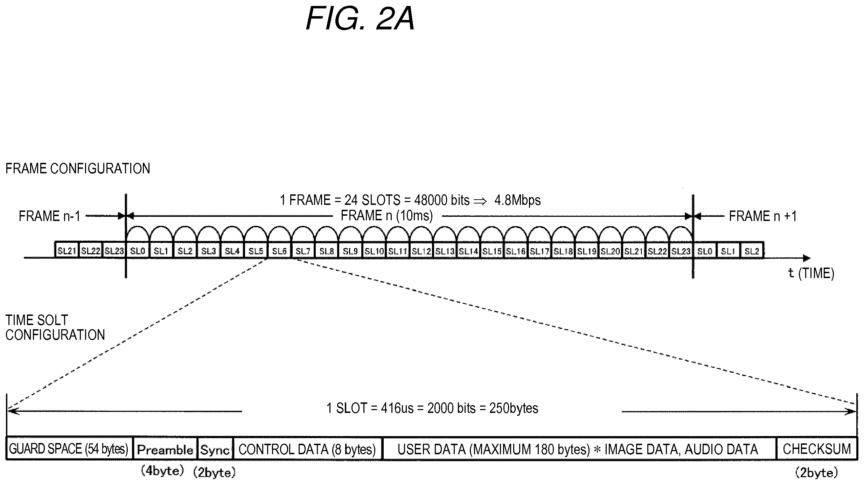

Next, a frame configuration and a time slot configuration at the time of synchronous communication according to the embodiment will be described with reference to FIG. 2A. As illustrated in FIG. 2A, each frame has a region of 48000 bits, is a bit rate of 10 ms cycle and 4.8 Mbps, and is divided into 24 time slots. Therefore, each time slot has a region of 2000 bits = 250 bytes, and a bit rate of 0.416 ms cycle and 4.8 Mbps.

Each time slot is divided into a 54-byte guard space, a 4-byte preamble field, a 2-byte sync field, an 8-byte control data field, a variable-length user data field of MAX 180 bytes, and a 2-byte checksum field.

The guard space is a time for avoiding collision of time slots due to a propagation delay time difference, a clock jitter or the like. In the preamble field, preamble data having a predetermined unique pattern is written.

In the sync field, a predetermined sync pattern is written. The sync pattern is a known data sequence arranged in the sync field, and is a data pattern which is used for taking synchronization at the time of receiving received data and is used for confirming that the received data is received at an accurate timing.

Control data is written in the control data field. User data (image data, audio data) is written in the user data field. In the checksum field, a checksum which is one type of error detection code is written. In the following description, there is also a case where the control data, the user data, and the checksum are simply referred to as "data portion". In addition, the configuration of the data portion is merely an example, and there is also a case where the configuration varies depending on the convenience of signal processing.

### Field Configuration of Control Data

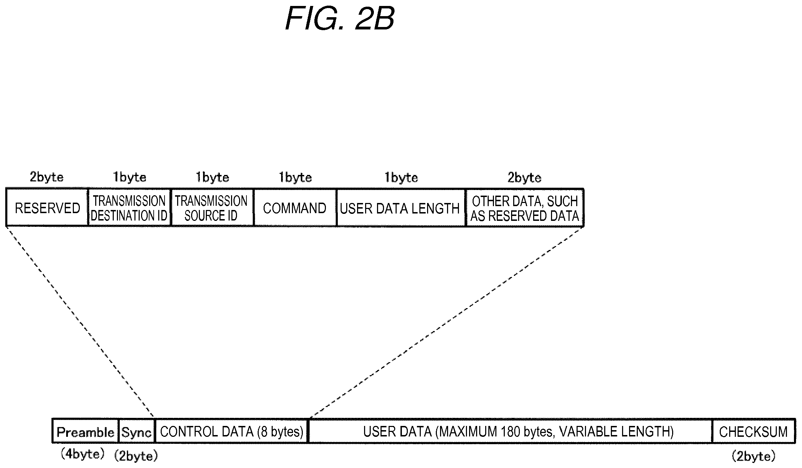

Next, the field configuration of the control data according to the embodiment will be described with reference to FIG. 2B.

As illustrated in FIG. 2B, the 8-byte control data field is divided into a 2-byte reserved field, a 1-byte transmission destination ID field, a 1-byte transmission source ID field, a 1-byte command field, a 1-byte user data length field, and a 2-byte field of another control data (reserved or the like).

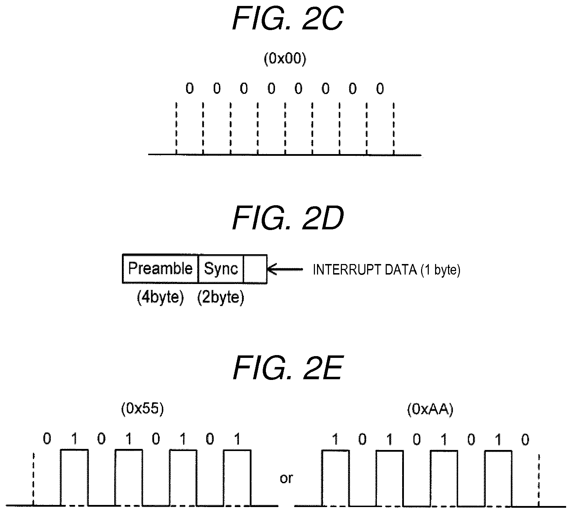

In addition, the reserved field of the control data, which is the first 1 byte after the sync field, is, for example, a pattern (0x00) in which all the bits are "0" as illustrated in FIG. 2C.

### Field Configuration of Interrupt Signal

Next, the field configuration of an interrupt signal according to the embodiment will be described with reference to FIG. 2D.

As illustrated in FIG. 2D, the interrupt signal is divided into a 4-byte preamble field, a 2-byte sync field, and a 1-byte interrupt data field. The preamble and sync patterns used in the interrupt signal are the same as those used at the time of the synchronous communication.

In addition, the interrupt data field which is the first 1 byte after the sync field of the interrupt signal, has, for example, a pattern (0×55) in which the odd-numbered bit is "0" and the even-numbered bit is "1", or a pattern (0×AA) in which the odd-numbered bit is "1" and the even-numbered bit is "0", as illustrated in FIG. 2E.

### Field Configuration of Control Slot

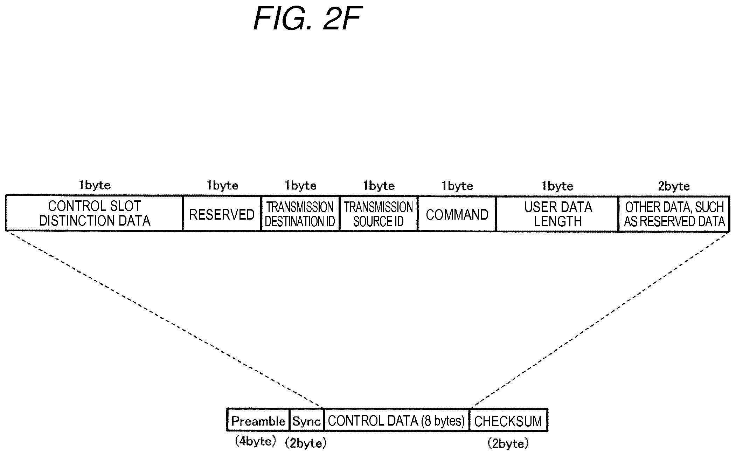

As illustrated in FIG. 2F, the control slot is divided into a 4-byte preamble field, a 2-byte sync field, an 8-byte control data field, and a 2-byte checksum field. The 8-byte control data field is divided into a 1-byte control slot distinction data field, a 1-byte reserved field, a 1-byte transmission destination ID field, a 1-byte transmission source ID field, a 1-byte command field, a 1-byte user data length field, and a 2-byte field of another control data (reserved or the like). In addition, after the checksum, all of the fields become a guard space. The preamble and sync patterns used in the control slot are the same as those used at the time of the synchronous communication.

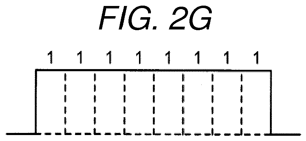

The control slot distinction data field, which is the first 1 byte after the sync field of the control slot, is, for example, a pattern (0xFF) in which all the bits are "1" as illustrated in FIG. 2G.

### Field Configuration of Slot in which Connection Request Data is Mounted

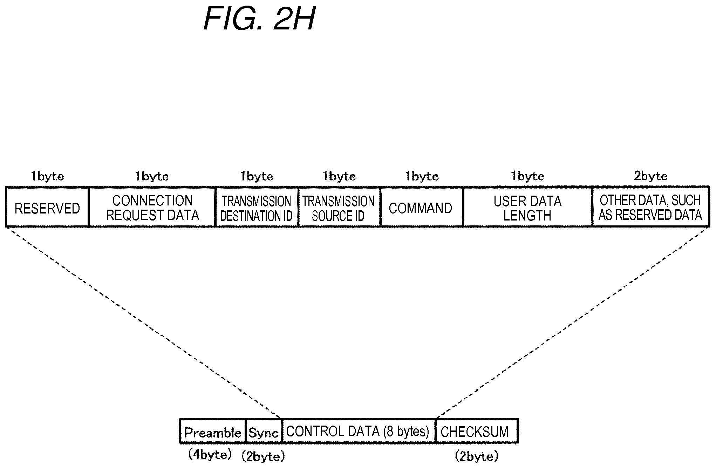

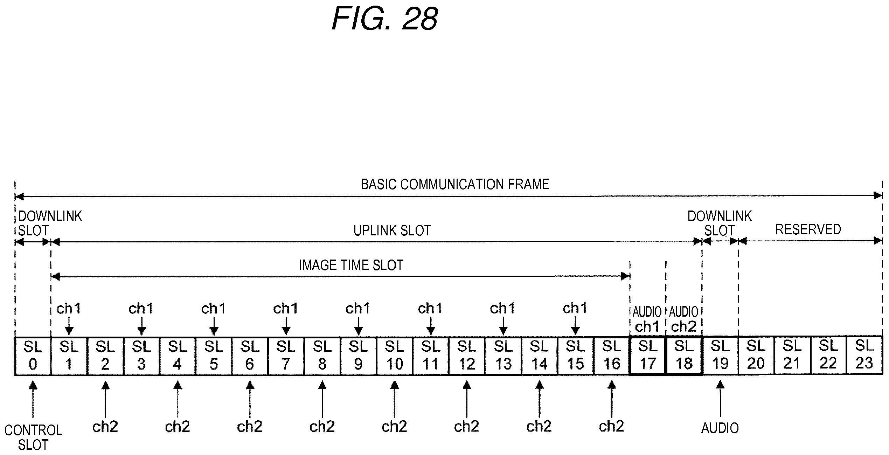

As illustrated in FIG. 2H, a slot in which connection request data from lobby entrance slave device 100 is mounted is divided into a 4-byte preamble field, a 2-byte sync field, an 8-byte control data field, and a 2-byte checksum field. The 8-byte control data field is divided into a 1-byte reserved field, 1-byte connection request data, a 1-byte transmission destination ID field, a 1-byte transmission source ID field, a 1-byte command field, a 1-byte user data length field, and a 2-byte field of another control data (reserved or the like). In addition, after the checksum, all of the fields become a guard space. The preamble and sync patterns used in the slot in which the connection request data is mounted are the same as those used at the time of the synchronous communication. The slot in which the connection request data is mounted uses, for example, SL23 (refer to FIG. 28), and in this case, SL23 is an uplink slot.

A connection request data field which is the second byte of the control data field after the sync field of the slot in which the connection request data is mounted is, for example, a pattern (0xFF) in which all of the bits are "1", similar to the control slot distinction data field illustrated in FIG. 2G.

### Field Configuration of Slot in which Connection Request Confirmation Data is Mounted

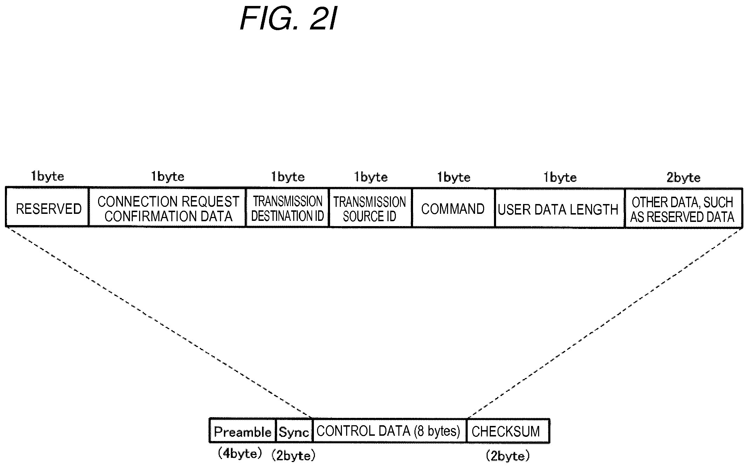

As illustrated in FIG. 2I, a slot in which connection request confirmation data from indoor monitor master device 200 is mounted is divided into a 4-byte preamble field, a 2-byte sync field, an 8-byte control data field, and a 2-byte checksum field. The 8-byte control data field is divided into a 1-byte reserved field, 1-byte connection request confirmation data, a 1-byte transmission destination ID field, a 1-byte transmission source ID field, a 1-byte command field, a 1-byte user data length field, and a 2-byte field of another control data (reserved or the like). In addition, after the checksum, all of the fields become a guard space. The preamble and sync patterns used in the slot in which the connection request confirmation data is mounted are the same as those used at the time of the synchronous communication. A slot in which the connection request confirmation data is mounted uses, for example, a control slot.

A connection request confirmation data field which is the second byte of the control data field after the sync field of the slot in which the connection request confirmation data is mounted is, for example, a pattern (0x55) in which the odd-numbered bit is "0" and the even-numbered bit is "1", similar to the interrupt data field illustrated in FIG. 2E.

### Configuration of Lobby Entrance Slave Device

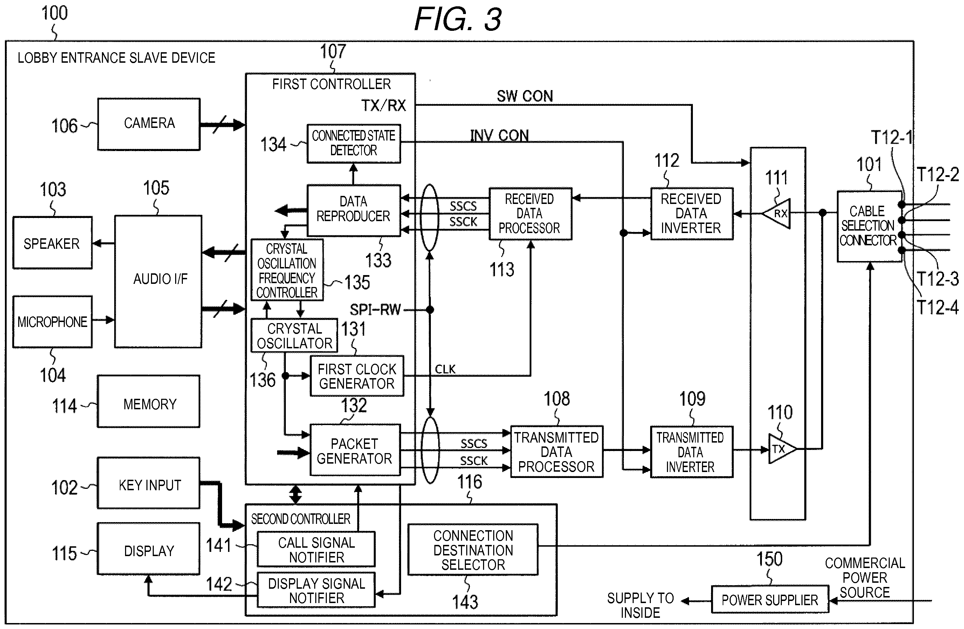

Next, a configuration of lobby entrance slave device 100 of the embodiment will be described with reference to the block diagram of FIG. 3. In addition, lobby entrance slave device 100 has terminals T12-1 to T12-N (N = 4 in FIG. 3) to which the two-wire cable linked to indoor monitor master device 200 is connected, and can be connected to a maximum of N pieces of indoor monitor master devices 200 by a star-shaped wiring via the two-wire cable.

As illustrated in FIG. 3, lobby entrance slave device 100 includes cable selection connector 101, key input 102, speaker 103, microphone 104, audio interface (I/F) 105, camera 106, and first controller 107. First controller 107 includes first clock generator 131, packet generator 132, data reproducer 133, connected state detector 134, crystal oscillation frequency controller 135, and crystal oscillator 136, on the inside thereof. In addition, entrance slave device 100 includes transmitted data processor 108, transmitted data inverter 109, transmission driver 110, reception driver 111, received data inverter 112, received data processor 113, memory 114, display 115, second controller 116, and power supplier 150. Second controller 116 includes call signal notifier 141, display signal notifier 142, and connection destination selector 143.

In accordance with a route setting signal output from connection destination selector 143, cable selection connector 101 connects terminal T12-i (i is any number from 1 to N) connected to indoor monitor master device 200 of the communication partner, and reception driver 111 and transmission driver 110, to each other. In addition, details of the internal configuration of cable selection connector 101 will be described later.

Key input 102 includes various buttons including numeric buttons ("0" to "9") and a call button, and outputs room number information and a call signal that correspond to a button operation to second controller 116.

Speaker 103 converts analog audio data or analog ringing tone data output from audio I/F 105 into the audio and outputs the audio.

Microphone 104 collects ambient audio sound, converts the audio into the analog audio data, and outputs the data to audio I/F 105.

Audio I/F 105 converts digital audio data output from first controller 107 into the analog audio data, adjusts a signal level, and outputs the data to speaker 103. In addition, audio I/F 105 converts the digital ringing tone data output from first controller 107 into analog ringing tone data, and outputs the data to speaker 103. In addition, audio I/F 105 adjusts the signal level of the analog audio data output from microphone 104, converts the data into the digital audio data, and outputs the data to first controller 107. The analog and digital conversion is performed by an A/D and D/A converter (not illustrated).

In addition, audio I/F 105 may output data obtained by performing predetermined audio compression processing with respect to the data obtained by converting the analog audio data output from microphone 104 into a digital form, as the digital audio data, to first controller 107. Further, in a case where the digital audio data output from first controller 107 is data obtained by performing the predetermined audio compression processing, audio I/F 105 performs digital and analog conversion after performing predetermined audio expansion processing with respect to the data.

Camera 106 includes a digital camera, photographs a video of the entrance according to an instruction of first controller 107, generates digital video data, and outputs the data to first controller 107. In addition, camera 106 may have an encoder module mounted therein. In other words, camera 106 may output the data obtained by performing predetermined moving image compression processing, such as H.264, with respect to the video data output from the digital camera, as digital video data, to first controller 107.

First controller 107 controls each unit of lobby entrance slave device 100. In addition, first controller 107 exchanges various control signals with second controller 116. In addition, first controller 107 outputs a switchover control signal (SWCON) instructing a transmission section that permits transmission and a reception section that permits reception, to transmission driver 110 and reception driver 111. In addition, first controller 107 generates the digital ringing tone data by using the input of the room number information and the call signal from call signal notifier 141 of second controller 116 as a trigger, and outputs the data to audio I/F 105.

In addition, first controller 107 outputs communication state information indicating a communication state with indoor monitor master device 200 that corresponds to various types of message information to display signal notifier 142 of second controller 116. The communication state includes a state where calling is performed with respect to indoor monitor master device 200 that corresponds to room number information, a state where a response from indoor monitor master device 200 that corresponds to the room number information is received, and a state where an error is generated at the time of communication with indoor monitor master device 200, and the like.

First clock generator 131 of first controller 107 is a clock for sampling the received data, generates a clock (CLK) of a first frequency (for example, 48 MHz (n = 10)) that corresponds to n times (n is 1 or more) a bit rate of the received data with reference to the oscillation frequency of crystal oscillator 136, and outputs the clock to received data processor 113.

Packet generator 132 of first controller 107 generates the uplink packet for realizing a call with a video. Specifically, packet generator 132 appropriately divides the digital audio data output from audio I/F 105 and the digital video data output from camera 106, writes the digital audio data and the digital video data into a user data field of each time slot, and writes control data including a transmission source ID of an identifier intrinsic to the host device (lobby entrance slave device 100) and the transmission destination ID of an identifier of indoor monitor master device 200 of the communication partner into the control data field of each time slot. Furthermore, packet generator 132 writes the preamble data and sync patterns into each time slot, and generates the uplink packet (transmitted data). Furthermore, packet generator 132 generates a transmission enable signal (SSCS) and a clock (SSCK) of a second frequency (for example, 4.8 MHz) for transmission. In addition, packet generator 132 outputs the uplink packet to transmitted data processor 108 in synchronization with the transmission enable signal (SSCS) and the clock (SSCK). In addition, the clock (SSCK) is generated with reference to the oscillation frequency of crystal oscillator 136.

In addition, in a standby state where no data is transmitted and received between lobby entrance slave device 100 and indoor monitor master device 200, packet generator 132 does not generate the uplink packet until the room number information and the call signal are input. When inputting the room number information and the call signal from call signal notifier 141 in a standby state, packet generator 132 synchronizes the frame with indoor monitor master device 200 with reference to a downlink control slot, and then generates a connection request. Frame synchronization means that lobby entrance slave device 100 is synchronized with indoor monitor master device 200 by a frame by distinguishing a control slot which is a beacon. Specifically, in a control slot illustrated in FIG. 2F, lobby entrance slave device 100 first receives the 4-byte preamble data and a 2-byte sync pattern, and completes synchronization by a bit unit. Next, by using the control slot distinction data, it is determined whether or not the slot is a beacon, and the frame synchronization is completed. Further, in the connection request, after selected indoor monitor master device 200 and lobby entrance slave device 100 are frame-synchronized with reference to the control slot (SL0 (refer to FIG. 28)) which is the beacon transmitted by indoor monitor master device 200, for example, lobby entrance slave device 100 sets a command indicating "connection request" in a control data region of the last time slot (SL23) of a communication frame. In addition, when indoor monitor master device 200 receives the "connection request" set by lobby entrance slave device 100, for example, indoor monitor master device 200 transmits the "connection request confirmation" which is confirmation with respect to "connection request" in the control slot (SL0) of the next communication frame to lobby entrance slave device 100, and lobby entrance slave device 100 starts frame synchronization communication after receiving the "connection request confirmation". Further, in a standby state, packet generator 132 may generate the interrupt signal from call signal notifier 141 using the room number information and the call signal as triggers.

When inputting the enable signal (SSCS) from received data processor 113, data reproducer 133 of first controller 107 uses the clock (SSCK) of the second frequency output from received data processor 113, generates the downlink packet output from received data processor 113, outputs the digital audio data included in the reproduced downlink packet (decoded data) to audio I/F 105, and outputs the sync pattern to connected state detector 134. In addition, data reproducer 133 outputs the reproduced downlink packet (digital communication frame) to crystal oscillation frequency controller 135.

Connected state detector 134 of first controller 107 is a reverse pattern which is a check sync pattern (hereinafter, referred to as "positive connection check sync pattern" (for example, all 16 bits are "0")) in a case where the two-wire cable is positively connected, and a positive connection check sync pattern, and stores the check sync pattern (hereinafter, referred to as "reverse connection check sync pattern" (for example, all 16 bits are "1")) in a case where the two-wire cable is reversely connected. In addition, at the timing synchronized with indoor monitor master device 200, connected state detector 134 collates the sync pattern of the received data output from data reproducer 133 with the positive connection check sync pattern and the reverse connection check sync pattern (two-wire cable inversion detection). Connected state detector 134 determines that the two-wire cable is positively connected in a case where the sync pattern of the received data and the positive connection check sync pattern completely match each other, and determines that the two-wire cable is reversely connected in a case where the sync pattern of the received data and the reverse connection check sync pattern completely match each other. In addition, connected state detector 134 outputs an inversion control signal (INVCON) indicating the determination result to transmitted data inverter 109 and received data inverter 112.

Crystal oscillation frequency controller 135 of first controller 107 controls the oscillation frequency of the crystal oscillator 136 so as to reduce a time difference between a first time occupied by a prescribed data number of reproduced data output from data reproducer 133 and a second time due to the count of the internal measurement clock that corresponds to the prescribed data number. In addition, the details of the configuration of crystal oscillation frequency controller 135 will be described later.

Crystal oscillator 136 of first controller 107 has a crystal oscillator and outputs a voltage amplitude signal (frequency signal) of the oscillation frequency to first clock generator 131, packet generator 132, and crystal oscillation frequency controller 135. Further, crystal oscillator 136 finely adjusts the oscillation frequency based on the control of crystal oscillation frequency controller 135. In addition, the details of the configuration of crystal oscillator 136 will be described later.

When inputting the enable signal (SSCS) from packet generator 132, transmitted data processor 108 uses the clock (SSCK) of the second frequency output from packet generator 132, generates the uplink signal by performing modulation processing with respect to the data of the uplink packet output from packet generator 132, and outputs the signal to transmitted data inverter 109.

In a case where it is determined that the two-wire cable is reversely connected in connected state detector 134, transmitted data inverter 109 inverts the uplink signal output from transmitted data processor 108 and outputs the signal to transmission driver 110. Meanwhile, in a case where it is determined that the two-wire cable is positively connected in connected state detector 134, transmitted data inverter 109 outputs the uplink signal output from transmitted data processor 108 to transmission driver 110 as it is.

Transmission driver 110 transmits the uplink signal to indoor monitor master device 200 via cable selection connector 101 in the transmission section instructed by the switchover control signal (SWCON) from first controller 107.

Reception driver 111 receives the downlink signal transmitted from indoor monitor master device 200 via cable selection connector 101. In addition, reception driver 111 outputs the downlink signal to received data inverter 112 in the reception section instructed by the switchover control signal (SWCON) from first controller 107.

In a case where it is determined that the two-wire cable is reversely connected in connected state detector 134, received data inverter 112 inverts the downlink signal output from reception driver 111 and outputs the signal to received data processor 113. Meanwhile, in a case where it is determined that the two-wire cable is positively connected in connected state detector 134, received data inverter 112 outputs the downlink signal output from reception driver 111 to received data processor 113 as it is.

Received data processor 113 uses the clock (CLK) of the first frequency output from first clock generator 131, and detects synchronization (timing of a leading bit of each bit of the received data) with indoor monitor master device 200 by using the preamble data included in the downlink signal output from reception driver 111. In addition, received data processor 113 outputs the enable signal (SSCS) that permits the data reproduction operation to data reproducer 133 at the timing of detecting a unique pattern of the preamble data.

In addition, received data processor 113 decodes the downlink signal (received data) output from received data inverter 112, and outputs the decoded data to data reproducer 133. In addition, received data processor 113 generates the clock (SSCK) of the second frequency (for example, 4.8 MHz) that corresponds to the bit rate of the received data with reference to the clock (CLK) of the first frequency output from first clock generator 131, and outputs the clock to data reproducer 133.

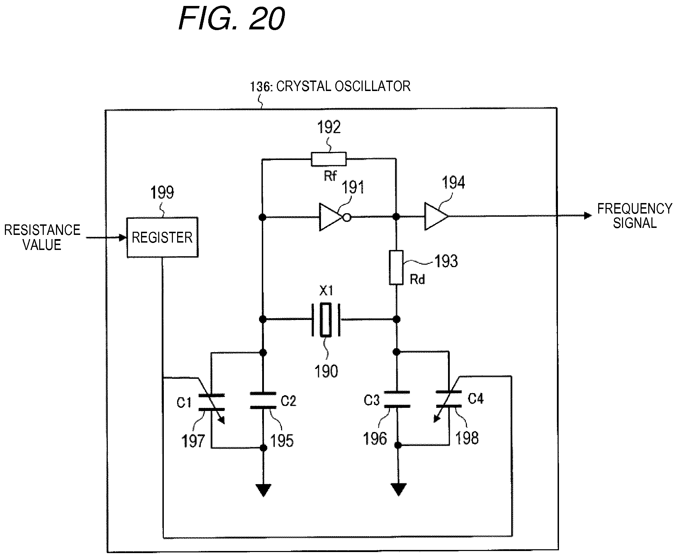

Memory 114 stores the identifier of the host device (lobby entrance slave device 100). In addition, memory 114 stores the room number, the terminals T12-1 to T12-N, and the identifiers of each indoor monitor master device 200 in association with each other. Further, memory 114 stores a set value set in register 199 (refer to FIG. 20) of crystal oscillator 136 for each indoor monitor master device 200.

Display 115 includes a liquid crystal display and displays various types of message information output from display signal notifier 142 of second controller 116.

Second controller 116 controls each unit of lobby entrance slave device 100 at the start of communication with indoor monitor master device 200.

In a case of inputting the room number information and the call signal from key input 102, call signal notifier 141 of second controller 116 outputs a signal indicating that the room number information and the call signal are input to first controller 107.

Display signal notifier 142 of second controller 116 outputs various types of message information to display 115. Specifically, in a case of inputting the room number information and the call signal from key input 102, display signal notifier 142 outputs the message information indicating the room number to display 115. Further, in a case where the connection request confirmation cannot be received even after a predetermined time has elapsed after the connection request is transmitted, display signal notifier 142 outputs a message (recall notification) for urging retry of input of the room number and pressing of the call button to display 115. In addition, in a case of inputting the communication state information indicating a state where the calling is being performed with respect to indoor monitor master device 200 that corresponds to the room number information from first controller 107, display signal notifier 142 outputs the room number and a message information indicating that the calling is being performed, to display 115. In addition, in a case of inputting the communication state information indicating a state where a response is being received from indoor monitor master device 200 that corresponds to the room number information from first controller 107, display signal notifier 142 outputs the room number and a message information indicating that the response is being performed, to display 115. In addition, in a case of inputting the communication state information indicating a state where an error is generated at the time of communication with indoor monitor master device 200 from first controller 107, display signal notifier 142 outputs message information indicating that a communication error is being generated, to display 115.

In a case where the room number information and the call signal are input from key input 102, connection destination selector 143 of second controller 116 selects terminal T12-i (indoor monitor master device 200) that corresponds to the room number stored in memory 114, and outputs the route setting signal indicating that terminal T12-i is selected to cable selection connector 101.

Power supplier 150 supplies power to each unit of lobby entrance slave device 100.

### Internal Configuration of Cable Selection Connector

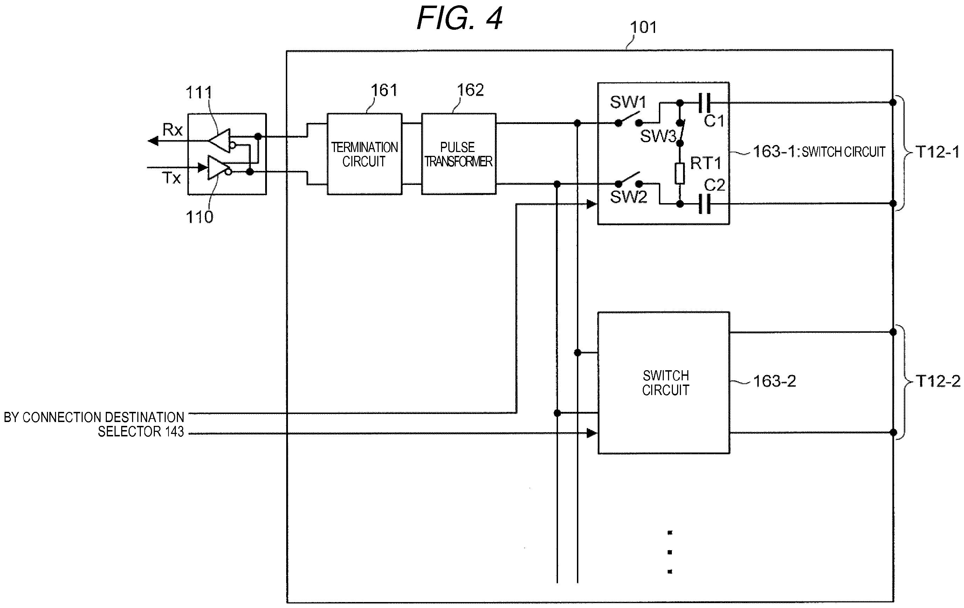

Next, the internal configuration of cable selection connector 101 of the embodiment will be described with reference to FIG. 4. As illustrated in FIG. 4, cable selection connector 101 includes termination circuit 161, pulse transformer 162, and switch circuits 163-1 to 163-N. Each switch circuit 163 includes first switch SW1, second switch SW2, third switch SW3, capacitors C1 and C2, and termination resistor RT1.

In a standby state, first switch SW1 and second switch SW2 are open and third switch SW3 is closed. Accordingly, a state where indoor monitor master device 200, and reception driver 111 and transmission driver 110 are disconnected, is achieved. In addition, in a state where SW3 is closed, termination resistor RT1 terminates a part between the two lines that extend from the two-wire cable within the lobby entrance slave device. Here, termination resistor RT1 terminates a part between the two lines without connecting a midpoint of termination resistor RT1 to GND of the lobby entrance slave device, the stabilizing power source, or the like, to each other. Since termination resistor RT1 is not connected to a fixed potential, a state of being terminated by "floating" is achieved. Accordingly, it is possible to reduce the influence of noise or the like that flows from the connection point of termination resistor RT1 to lobby entrance slave device 100.

Cable selection connector 101 closes first switch SW1 and second switch SW2 of switch circuit 163 that corresponds to indoor monitor master device 200 of the communication partner in accordance with the route setting signal input from connection destination selector 143, and opens third switch SW3. Accordingly, the two-wire cable connected to indoor monitor master device 200 of the communication partner, and reception driver 111 and transmission driver 110 are connected to each other via termination circuit 161 and pulse transformer 162, and a communication route between lobby entrance slave device 100 and indoor monitor master device 200 of the communication partner is set.

In addition, in a case of the synchronization type, each indoor monitor master device 200 always periodically transmits the downlink control slot as a beacon. Further, in a case of the asynchronization type, each indoor monitor master device 200 transmits the downlink control slot when receiving the interrupt signal from lobby entrance slave device 100. Lobby entrance slave device 100 performs frame synchronization with indoor monitor master device 200 with reference to the received downlink control slot at the time of being connected to indoor monitor master device. For example, lobby entrance slave device 100 closes first switch SW1 and second switch SW2, receives the control slot of the downlink slot "SL0" (refer to FIG. 28) which is periodically transmitted by indoor monitor master device 200 after releasing third switch SW3, and captures synchronization with indoor monitor master device 200. After this, lobby entrance slave device 100 transmits an uplink packet connection request in the slot "SL23" that is the reserved region, receives downlink packet connection request confirmation from indoor monitor master device 200, and is connected to indoor monitor master device 200.

### Configuration of Indoor Monitor Master Device

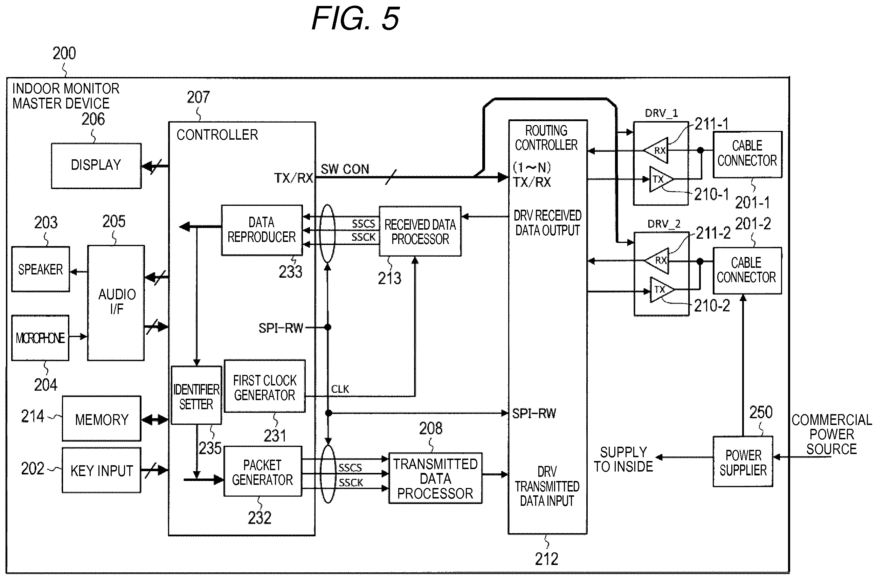

Next, a configuration of indoor monitor master device 200 of the embodiment will be described with reference to the block diagram of FIG. 5. As illustrated in FIG. 5, indoor monitor master device 200 includes cable connector 201, key input 202, speaker 203, microphone 204, audio interface (I/F) 205, display 206, and controller 207. Controller 207 includes first clock generator 231, packet generator 232, data reproducer 233, and identifier setter 235, on the inside thereof. In addition, indoor monitor master device 200 includes transmitted data processor 208, transmission driver 210, reception driver 211, routing controller 212, received data processor 213, memory 214, and power supplier 250. Further, indoor monitor master device 200 includes a plurality (two in FIG. 5) of cable connectors 201, transmission drivers 210, and reception drivers 211.

Cable connector 201-j (j is an integer that is equal to or greater than 1) includes a connection terminal for the two-wire cable and connects one end on the indoor side of the two-wire cable and transmission driver 210-j and reception driver 211-j to each other in a state where the signals can be transmitted. The other end of the two-wire cable connected to cable connector 201-1 is connected to lobby entrance slave device 100. The other end of the two-wire cable connected to cable connector 201-2 is connected to door-front entrance slave device 300. In addition, cable connector 201-2 supplies a DC power source for door-front entrance slave device 300 supplied from power supplier 250, to door-front entrance slave device 300 from the two-wire cable. In addition, in a case where indoor monitor master device 200 has three or more cable connectors 201, the other end of the two-wire cable connected to cable connector 201-j (j in this case is an integer of 3 or more), can be connected to other devices, such as an extension monitor.

Key input 202 includes a response button, and when the response button is operated, a response signal indicating that the response button is operated, is output to controller 207.

Speaker 203 converts the analog audio data output from audio I/F 205 into the audio and outputs the audio.

Microphone 204 collects ambient audio sound, converts the audio into the analog audio data, and outputs the data to audio I/F 205.

Audio I/F 205 converts the ringing tone data and the digital audio data output from controller 207 into the analog audio data, adjusts the signal level, and outputs the data to speaker 203. In addition, audio I/F 205 adjusts the signal level of the analog audio data output from microphone 204, converts the data into the digital audio data, and outputs the data to controller 207. The analog and digital conversion is performed by an A/D and D/A converter (not illustrated).

In addition, audio I/F 205 may output the data obtained by performing the predetermined audio compression processing with respect to the data obtained by converting the analog audio data output from microphone 204 into a digital form, as the digital audio data, to controller 207. Further, in a case where the digital audio data output from controller 207 is data obtained by performing the predetermined audio compression processing, audio I/F 205 performs digital and analog conversion after performing the predetermined audio expansion processing with respect to the data.

Display 206 includes a liquid crystal display, reproduces the digital video data output from controller 207, and displays the video of the entrance. Further, in a case where the digital video data output from controller 207 is data obtained by performing the predetermined moving image compression processing, predetermined moving image extension processing is performed with respect to the data, and the video display is performed.

Controller 207 controls each unit of indoor monitor master device 200. In addition, controller 207 outputs the switchover control signal (SWCON) instructing the transmission section that permits transmission and the reception section that permits reception, to transmission driver 210-j, reception driver 211-j, and routing controller 212. In addition, when inputting the response signal from key input 202, controller 207 stops the output of the ringing tone data to audio I/F 205.

First clock generator 231 of controller 207 is a clock for sampling the received data, generates a clock (CLK) of the first frequency (for example, 48 MHz (n = 10)) that corresponds to n times the bit rate of the received data, and outputs the clock to received data processor 213.

Packet generator 232 of controller 207 generates the downlink packet for realizing a call with a video. Specifically, packet generator 232 appropriately divides the digital audio data output from audio I/F 205, writes the digital audio data into the user data field of each time slot, and writes the control data including the transmission source ID of the identifier intrinsic to the host device (indoor monitor master device 200) and the transmission destination ID of the identifier of the communication partner (lobby entrance slave device 100 or door-front entrance slave device 300), which are output from identifier setter 235, into the control data field of each time slot. Furthermore, packet generator 232 writes the preamble data and sync patterns into each time slot, and generates the uplink packet (transmitted data). Furthermore, packet generator 232 generates the transmission enable signal (SSCS) and the clock (SSCK) of the second frequency (for example, 4.8 MHz) for transmission. In addition, packet generator 232 outputs the uplink packet to transmitted data processor 208 in synchronization with the transmission enable signal (SSCS) and the clock (SSCK).

In addition, in a case of the synchronization type, packet generator 232 always periodically generates the downlink control slot. Further, in a case of the asynchronization type, when packet generator 232 receives the interrupt signal from lobby entrance slave device 100, packet generator 232 generates the downlink control slot.

When inputting the enable signal (SSCS) from received data processor 213, data reproducer 233 of controller 207 uses the clock (SSCK) of the second frequency output from received data processor 213, and acquires the uplink packet (decoded data) output from received data processor 213.

In addition, data reproducer 233 outputs the digital video data included in the uplink packet to display 206, and outputs the digital ringing tone data and the digital audio data included in the uplink packet to audio I/F 205. Further, data reproducer 233 outputs the transmission source ID included in the uplink packet to identifier setter 235.

Identifier setter 235 of controller 207 stores the transmission source ID (identifier of lobby entrance slave device 100 or identifier of door-front entrance slave device 300) output from data reproducer 233 in memory 214. In addition, identifier setter 235 reads the identifier intrinsic to the host device (indoor monitor master device 200) and the identifier of the communication partner (lobby entrance slave device 100 or door-front entrance slave device 300) from memory 214, and outputs the identifiers to packet generator 232.

When inputting the enable signal (SSCS) from packet generator 232, transmitted data processor 208 uses the clock (SSCK) of the second frequency output from packet generator 232, generates the downlink signal by performing the modulation processing with respect to the data of the downlink packet output from packet generator 232, and outputs the signal to routing controller 212.

Transmission driver 210-1 transmits the downlink signal output from routing controller 212 to lobby entrance slave device 100 via cable connector 201-1 in the transmission section instructed by the switchover control signal (SWCON) from controller 207. Transmission driver 210-2 transmits the downlink signal output from routing controller 212 to door-front entrance slave device 300 via cable connector 201-2 in the transmission section instructed by the switchover control signal (SWCON) from controller 207. In addition, in a case where indoor monitor master device 200 has three or more transmission drivers 210, transmission driver 210-j (j in this case is an integer of 3 or more) transmits the downlink signal output from routing controller 212 to other devices, such as the extension monitor, via cable connector 201-j.

Reception driver 211-1 receives the uplink signal transmitted from lobby entrance slave device 100 via cable connector 201-1. Reception driver 211-2 receives the uplink signal transmitted from door-front entrance slave device 300 via cable connector 201-2. In addition, reception drivers 211-1 and 211-2 output the uplink signal to routing controller 212 in the reception section instructed by the switchover control signal (SWCON) from controller 207. In addition, in a case where indoor monitor master device 200 has three or more reception drivers 211, reception driver 211-j (j in this case is an integer of 3 or more) receives the uplink signal transmitted from other devices, such as the extension monitor, via cable connector 201-j.

Routing controller 212 outputs the uplink signal output from the reception driver 211-j to received data processor 213. In addition, routing controller 212 outputs the downlink signal addressed to lobby entrance slave device 100, which is output from transmitted data processor 208, to transmission driver 210-1, and outputs the downlink signal addressed to door-front entrance slave device 300 to transmission driver 210-2. In addition, in a case where indoor monitor master device 200 has three or more transmission drivers 210, the downlink signal addressed to other devices, such as the extension monitor, is output to transmission driver 210-j (j in this case is an integer of 3 or more).

Received data processor 213 uses the clock (CLK) of the first frequency output from first clock generator 231, and detects the timing of the leading bit of the sync pattern on the time slot of the received data by using the preamble data included in the uplink signal output from routing controller 212. In addition, received data processor 213 outputs the enable signal (SSCS) that permits the data reproduction operation to data reproducer 233 at the timing of detecting a unique pattern of the preamble data.

In addition, received data processor 213 decodes the uplink signal (received data) output from routing controller 212, and outputs the decoded data to data reproducer 233. In addition, received data processor 213 generates the clock (SSCK) of the second frequency (for example, 4.8 MHz) that corresponds to the bit rate of the received data with reference to the clock (CLK) of the first frequency output from first clock generator 231, and outputs the clock to data reproducer 233.

Memory 214 stores the identifier of lobby entrance slave device 100, identifier of the host device (indoor monitor master device 200), and the identifier of door-front entrance slave device 300 to be connected. In addition, in a case where indoor monitor master device 200 is also connected to other devices, such as the extension monitor, the identifier of the other device is stored.

Power supplier 250 supplies power to each unit of indoor monitor master device 200. In addition, power supplier 250 supplies the DC power source for door-front entrance slave device 300 from the two-wire cable to door-front entrance slave device 300 via cable connector 201-2.

### Configuration of Door-front Entrance Slave Device

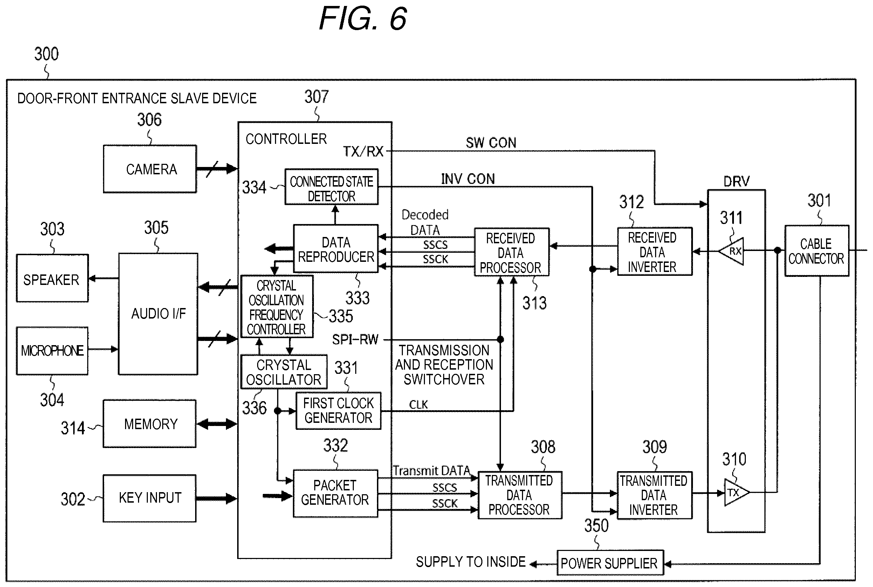

Next, a configuration of door-front entrance slave device 300 of the embodiment will be described with reference to the block diagram of FIG. 6. As illustrated in FIG. 6, door-front entrance slave device 300 includes cable connector 301, key input 302, speaker 303, microphone 304, audio interface (I/F) 305, camera 306, and controller 307. Controller 307 includes first clock generator 331, packet generator 332, data reproducer 333, connected state detector 334, crystal oscillation frequency controller 335, and crystal oscillator 336, on the inside thereof. In addition, door-front entrance slave device 300 includes transmitted data processor 308, transmitted data inverter 309, transmission driver 310, reception driver 311, received data inverter 312, received data processor 313, memory 314, and power supplier 350.

Cable connector 301 includes a connection terminal for the two-wire cable and connects one end on the entrance side of the two-wire cable and transmission driver 311 and reception driver 310 to each other in a state where signals can be transmitted. In addition, the other end of the two-wire cable is connected to indoor monitor master device 200. Further, cable connector 301 supplies the DC power supplied from the two-wire cable to power supplier 350.

Key input 302 includes a call button, and when the call button is operated, a signal indicating that the call button is operated is output to controller 307.

Speaker 303 converts the analog audio data output from audio I/F 305 into the audio and outputs the audio.

Microphone 304 collects ambient audio sound, converts the audio into the analog audio data, and outputs the data to audio I/F 305.

Audio I/F 305 converts the digital audio data output from controller 307 into the analog audio data, adjusts the signal level, and outputs the data to speaker 303. In addition, audio I/F 305 adjusts the signal level of the analog audio data output from microphone 304, converts the data into the digital audio data, and outputs the data to the controller 307. The analog and digital conversion is performed by the A/D and D/A converter (not illustrated).

In addition, audio I/F 305 may output the data obtained by performing the predetermined audio compression processing with respect to the data obtained by converting the analog audio data output from microphone 304 into a digital form, as the digital audio data to controller 307. Further, in a case where the digital audio data output from controller 307 is data obtained by performing the predetermined audio compression processing, audio I/F 305 performs digital and analog conversion after performing the predetermined audio expansion processing with respect to the data.

Camera 306 includes the digital camera, photographs a video of the entrance, generates the digital video data, and outputs the data to controller 307. In addition, camera 306 may have an encoder module mounted therein. In other words, camera 306 may output the data obtained by performing the predetermined moving image compression processing of H.264 or the like with respect to the moving image data output from the digital camera, as the digital video image data, to controller 307.

Controller 307 controls each unit of door-front entrance slave device 300. In addition, controller 307 outputs the switchover control signal (SWCON) instructing the transmission section that permits the transmission and the reception section that permits the reception, to transmission driver 310 and reception driver 311.

First clock generator 331 of controller 307 is a clock for sampling the received data, generates the clock (CLK) of the first frequency (for example, 48 MHz (n = 10)) that corresponds to n times (n is 1 or more) the bit rate of the received data with reference to the oscillation frequency of crystal oscillator 336, and outputs the clock to received data processor 313.

Packet generator 332 of controller 307 generates the uplink packet for realizing the call with a video. Specifically, packet generator 332 appropriately divides the digital audio data output from audio I/F 305 and the digital video data output from camera 306, writes the digital audio data and the digital video data into a user data field of each time slot, and writes the control data including a transmission source ID of an identifier intrinsic to the host device (door-front entrance slave device 300) and the transmission destination ID of the identifier intrinsic to indoor monitor master device 200 into the control data field of each time slot. Furthermore, packet generator 332 writes the preamble data and the sync patterns in each time slot, and generates the uplink packet (transmitted data). Furthermore, packet generator 332 generates the transmission enable signal (SSCS) and the clock (SSCK) of the second frequency (for example, 4.8 MHz) for transmission. In addition, packet generator 332 outputs the uplink packet to transmitted data processor 308 in synchronization with the transmission enable signal (SSCS) and the clock (SSCK). In addition, the clock (SSCK) is generated with reference to the oscillation frequency of crystal oscillator 336.

In addition, even when the part between door-front entrance slave device 300 and indoor monitor master device 200 is in a standby state, indoor monitor master device 200 periodically transmits the downlink control slot. Accordingly, in a case where the communication path is connected to indoor monitor master device 200, door-front entrance slave device 300 can be always frame-synchronized with indoor monitor master device 200 with reference to the downlink control slot.

When inputting the enable signal (SSCS) from received data processor 313, data reproducer 333 of controller 307 uses the clock (SSCK) of the second frequency output from received data processor 313, reproduces the downlink packet output from received data processor 313, outputs the digital audio data included in the reproduced downlink packet (decoded data) to audio I/F 305, and outputs the sync pattern to connected state detector 334.

Connected state detector 334 of controller 307 stores the positive connection check sync pattern and the reverse connection check sync pattern. In addition, connected state detector 334 collates the sync pattern of the received data output from data reproducer 333 with the positive connection check sync pattern and the reverse connection check sync pattern. Connected state detector 334 determines that the two-wire cable is positively connected in a case where the sync pattern of the received data and the positive connection check sync pattern completely match each other, and determines that the two-wire cable is reversely connected in a case where the sync pattern of the received data and the reverse connection check sync pattern completely match each other. In addition, connected state detector 334 outputs the inversion control signal (INVCON) indicating the determination result to transmitted data inverter 309 and received data inverter 312.

Crystal oscillation frequency controller 335 of controller 307 controls the oscillation frequency of the crystal oscillator 336 so as to reduce the time difference between the first time occupied by the prescribed data number of the reproduced data output from data reproducer 333 and the second time due to the count of the internal measurement clock that corresponds to the prescribed data number.

Crystal oscillator 336 of controller 307 has a crystal oscillator and outputs a voltage amplitude signal (frequency signal) of the oscillation frequency to first clock generator 331, packet generator 332, and crystal oscillation frequency controller 335. Further, crystal oscillator 336 finely adjusts the oscillation frequency based on the control of crystal oscillation frequency controller 335.

When inputting the enable signal (SSCS) from packet generator 332, transmitted data processor 308 uses the clock (SSCK) of the second frequency output from packet generator 332, generates the uplink signal by performing the modulation processing with respect to the data of the uplink packet output from packet generator 332, and outputs the signal to transmitted data inverter 309.

In a case where it is determined that the two-wire cable is reversely connected in connected state detector 334, transmitted data inverter 309 inverts the uplink signal output from transmitted data processor 308 and outputs the signal to transmission driver 310. Meanwhile, in a case where it is determined that the two-wire cable is positively connected in connected state detector 334, transmitted data inverter 309 outputs the uplink signal output from transmitted data processor 308 to transmission driver 310 as it is.

Transmission driver 310 transmits the uplink signal to indoor monitor master device 200 via cable connector 301 in the transmission section instructed by the switchover control signal (SWCON) from controller 307.

Reception driver 311 receives the downlink signal transmitted from indoor monitor master device 200 via cable connector 301. In addition, reception driver 311 outputs the downlink signal to received data inverter 312 in the reception section instructed by the switchover control signal (SWCON) from controller 307.

In a case where it is determined that the two-wire cable is reversely connected in connected state detector 334, received data inverter 312 inverts the downlink signal output from reception driver 311 and outputs the signal to received data processor 313. Meanwhile, in a case where it is determined that the two-wire cable is positively connected in connected state detector 334, received data inverter 312 outputs the downlink signal output from reception driver 311 to received data processor 313 as it is.

Received data processor 313 uses the clock (CLK) of the first frequency output from first clock generator 331, and detects synchronization (timing of the leading bit of each bit of the received data) with indoor monitor master device 200 by using the preamble data included in the downlink signal output from reception driver 311. In addition, received data processor 313 outputs the enable signal (SSCS) that permits the data reproduction operation to data reproducer 333 at the timing of detecting a unique pattern of the preamble data.

In addition, received data processor 313 decodes the downlink signal (received data) output from received data inverter 312, and outputs the decoded data to data reproducer 333. In addition, received data processor 313 generates the clock (SSCK) of the second frequency (for example, 4.8 MHz) that corresponds to the bit rate of the received data with reference to the clock (CLK) of the first frequency output from first clock generator 331, and outputs the clock to data reproducer 333.

Memory 314 stores the identifier of the host device (door-front entrance slave device 300) and the identifier of indoor monitor master device 200 to be connected.

Power supplier 350 supplies the power input via cable connector 301 to each unit of door-front entrance slave device 300.

In addition, lobby entrance slave device 100, indoor monitor master device 200, and door-front entrance slave device 300 are not illustrated, but respectively include a central processor (CPU), a storage medium, such as a read only memory (ROM) in which a control program is stored, a working memory, such as a random access memory (RAM), and a communication circuit. In this case, the functions of the above-described units are realized by the CPU executing the control program.

### Example of Preamble Data

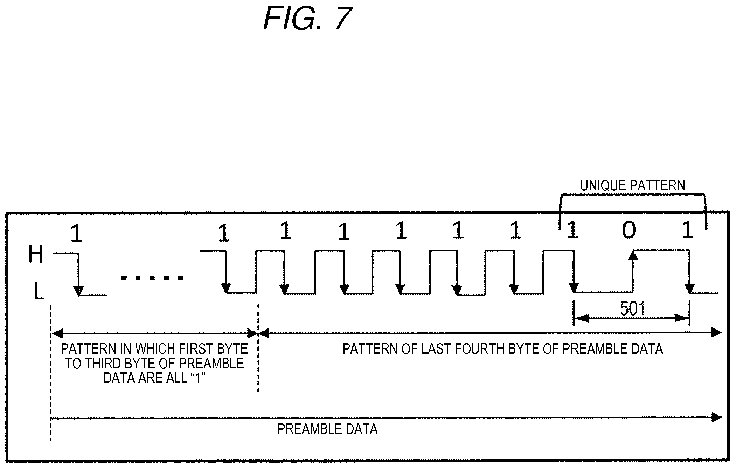

Next, an example of the preamble data used in the embodiment will be described with reference to FIG. 7.

As illustrated in FIG. 7, the preamble data (4 bytes = 32 bits) used in the embodiment is a pattern in which the first byte to the third byte are all "1", and is a pattern in which the first bit to the sixth bit are "1", the seventh bit is "0", and the eighth bit (the last one bit) is "1" in the fourth byte. Furthermore, in this case, the first one bit of the sync pattern following the preamble data is "1". As a result, the preamble data illustrated in FIG. 7 has a unique pattern in which period 501 which is an interval between adjacent falling edges from the sixth bit to the eighth bit in the fourth byte is longer than that in other periods. In addition, an H (high) period and an L (Low) period 501 between the adjacent falling edges are longer than that in other periods. In addition, FIG. 7 illustrates the waveform of the preamble data after Manchester encoding.

In addition, in the embodiment, the preamble data may be data illustrated in FIG. 7, which is inverted. In other words, the preamble data (4 bytes = 32 bits) used in the embodiment may be a pattern in which the first byte to the third byte are all "0", and is a pattern in which the first bit to the sixth bit are "0", the seventh bit is "1", and the eighth bit (the last one bit) is "0" in the fourth byte. In this case, the first one bit of the sync pattern following the preamble data is "0".

### Internal Configuration of Received Data Processor

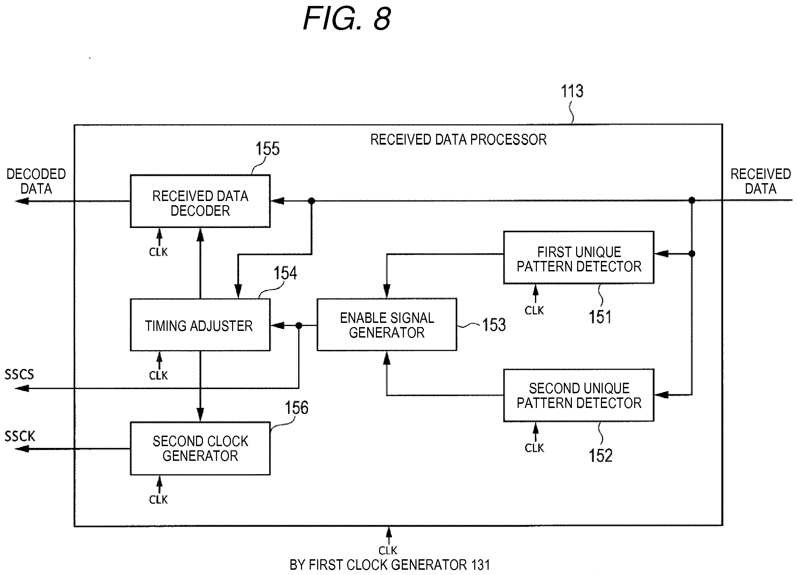

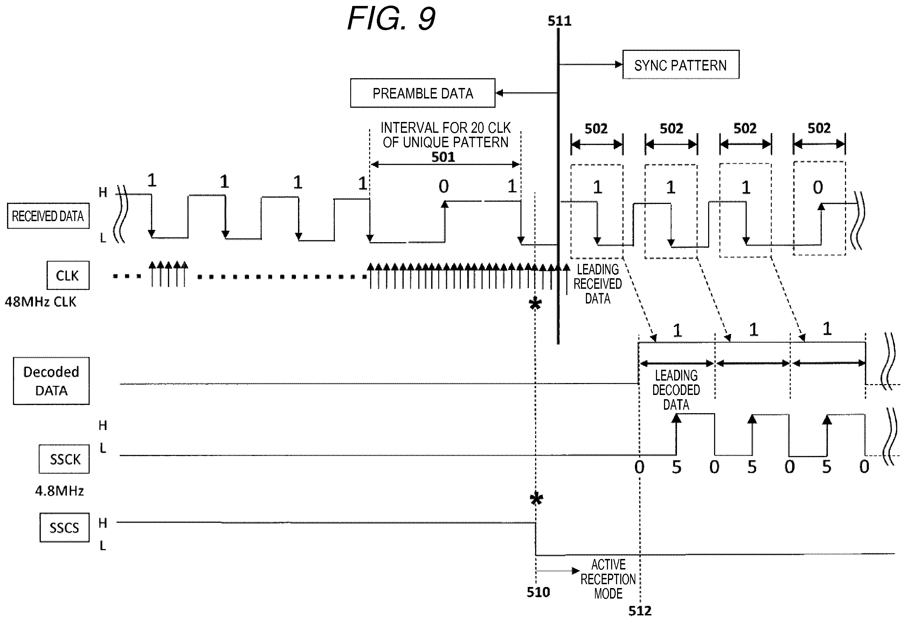

Next, the details of the internal configuration of received data processor 113 of lobby entrance slave device 100 will be described with reference to FIG. 8. In addition, in the description, in order to make it easy to understand the synchronization detection processing of the embodiment, FIG. 9 is used together with FIG. 8. In the example of FIG. 9, as the preamble data and the unique pattern thereof, the one illustrated in FIG. 7 is used. In addition, FIG. 9 illustrates a case where first clock generator 131 generates the clock (CLK) of 48 MHz and second clock generator 156 generates the clock (SSCK) of 4.8 MHz.

As illustrated in FIG. 8, received data processor 113 includes first unique pattern detector 151, second unique pattern detector 152, enable signal generator 153, timing adjuster 154, received data decoder 155, and second clock generator 156.

The received data output from received data inverter 112 is input to first unique pattern detector 151, second unique pattern detector 152, timing adjuster 154, and received data decoder 155. The clock (CLK) of first clock generator 131 is input to first unique pattern detector 151, second unique pattern detector 152, timing adjuster 154, received data decoder 155, and second clock generator 156.

First unique pattern detector 151 and second unique pattern detector 152 store a first prescribed number (for example, "18" to "22") of clocks for unique pattern detection.

First unique pattern detector 151 performs the sampling with respect to the preamble data included in the received data output from received data inverter 112 by the clock of first clock generator 131, and counts the clocks between adjacent falling edges. First unique pattern detector 151 determines that a unique pattern is detected in a case where the clock number between the adjacent falling edges matches one of the first prescribed numbers. In the example of FIG. 9, the clock number "20" of part 501 between the adjacent falling edges matches one of the first prescribed numbers. In addition, at a predetermined timing, first unique pattern detector 151 outputs a signal indicating the message to enable signal generator 153.

Second unique pattern detector 152 performs the sampling with respect to the preamble data included in the received data output from received data inverter 112 at the same timing as that of first unique pattern detector 151, and counts the clocks between adjacent rising edges. Second unique pattern detector 152 determines that a unique pattern is detected in a case where the clock number between the adjacent rising edges matches any of the first prescribed numbers, and outputs the signal indicating that the unique pattern is detected to enable signal generator 153.

When inputting a signal indicating that the unique pattern is detected from either first unique pattern detector 151 or second unique pattern detector 152 (timing 510 in FIG. 9), enable signal generator 153 outputs the enable signal that permits the data reproduction operation to timing adjuster 154 and data reproducer 133 (in the example of FIG. 9, enable signal SSCS is lowered to be an L (low) signal (activated)).

Timing adjuster 154 includes a timing generation counter on the inside thereof, and when inputting the enable signal from enable signal generator 153, timing adjuster 154 detects a waveform edge of the leading received data (first bit of the sync pattern). In addition, the leading received data starts at timing 511 of data inversion which is a waveform edge between the preamble data and the sync pattern.

In addition, after detecting the waveform edge, timing adjuster 154 repeats the counting from "0" to "9" by a timing generation counter by the clock of the first frequency, and observes a counter value at the timing of the waveform edge of each piece of received data. In addition, in a case where the counter value is different from a normal value, timing adjuster 154 corrects the counter value and outputs the corrected counter value to received data decoder 155 and second clock generator 156. Accordingly, a start timing of a range of a data reproduction window (range 502 in FIG. 9) that is a range in which the counter value is a predetermined value is adjusted.

Received data decoder 155 inputs the counter value from timing adjuster 154, scan-detects the logic inversion of the waveform for one bit of the received data in the range (range 502 in FIG. 9) of the data reproduction window, and performs decoding processing of the data that corresponds to the logic inversion of the Manchester-encoded waveform for one bit of the received data, and outputs the decoded data to data reproducer 133. In the example of FIG. 9, in range 502, received data decoder 155 outputs the decoded data "1" in a case where the waveform is inverted from "H" to "L", and outputs the decoded data "0" in a case where the waveform is inverted from "L" to "H". At the same time as the time when the second received data is input to received data decoder 155, the decoded data of the leading received data is delayed from received data decoder 155 by a certain time and is output. In addition, the details of the decoding processing of the received data performed by received data decoder 155 will be described later.

Second clock generator 156 inputs the counter values ("0" to "9") from timing adjuster 154, starts the output ("L" in FIG. 9) of the SSCK at the counter value "0" (timing 512 in FIG. 9) of the second received data, inverts the logic of the SSCK for the leading decoded data after a certain delay from "L" to "H" at the counter value "5" of the leading received data, and inverts the logic of the SSCK at the boundary between the leading decoded data and the second decoded data from "H" to "L" at the counter value "0" of the second received data. After this, second clock generator 156 repeats the logical inversion from "H" to "L" at the count value "0" and the logical inversion from "L" to "H" at the count value "5", with respect to reproduction clock SSCK. In addition, second clock generator 156 outputs the clock (SSCK) of the second frequency (for example, 4.8 MHz) to data reproducer 133 at the timing of the logic inversion from "L" to "H".

The internal configuration of received data processor 213 of indoor monitor master device 200 and the internal configuration of received data processor 313 of door-front entrance slave device 300 are the same as the internal configuration of received data processor 113 of lobby entrance slave device 100.

### Detailed Description of Detection of Unique Pattern

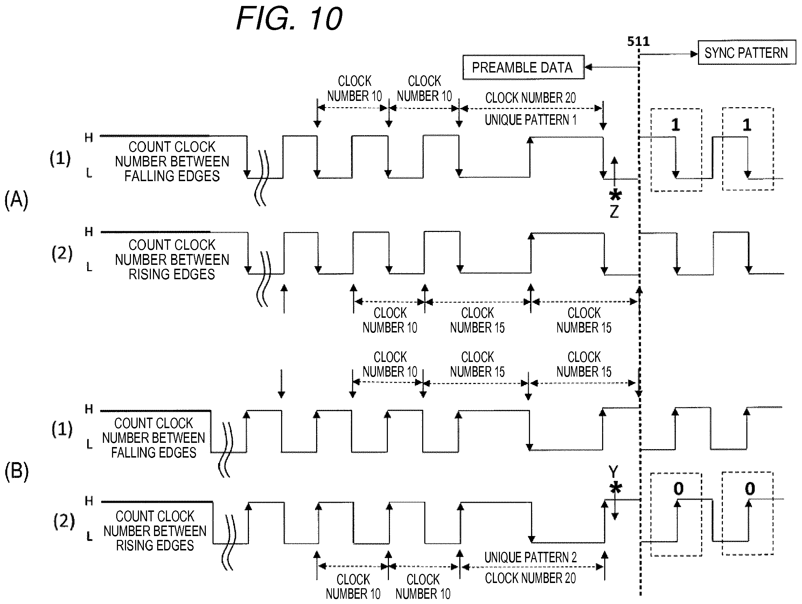

Next, the detection of the unique pattern will be described in detail with reference to FIG. 10. FIG. 10(A) illustrates the unique pattern of the normal polarity and the received waveform in the vicinity thereof in a case where the two-wire cable is positively connected, (1) of FIG. 10(A) illustrates the clock number counted by first unique pattern detector 151, and (2) in FIG. 10(A) illustrates the clock number counted by second unique pattern detector 152. FIG. 10(B) illustrates the unique pattern of the inversion polarity and the received waveform in the vicinity thereof in a case where the two-wire cable is reversely connected, (1) of FIG. 10(B) illustrates the clock number counted by first unique pattern detector 151, and (2) in FIG. 10(B) illustrates the clock number counted by second unique pattern detector 152.

In a case where the two-wire cable is positively connected, as illustrated in (1) of FIG. 10(A), the clock number counted by first unique pattern detector 151 becomes "20" between the adjacent falling edges of unique pattern 1, matches one of the first prescribed numbers, becomes "10" between other adjacent falling edges, and does not match any of the first prescribed numbers. When first unique pattern detector 151 detects unique pattern 1, enable signal generator 153 lowers (activates) the enable signal (SSCS) at a predetermined timing Z. Meanwhile, as illustrated in (2) of FIG. 10(A), the clock number counted in second unique pattern detector 152 becomes "10" or "15" between any adjacent rising edges, and does not match any of the first prescribed numbers. Therefore, second unique pattern detector 152 cannot detect the unique pattern. In this manner, in a case where the two-wire cable is positively connected, only unique pattern 1 of which the sampling clock number is unique is detected in received data processor 113 (first unique pattern detector 151 and second unique pattern detector 152).

In a case where the two-wire cable is reversely connected, as illustrated in (2) of FIG. 10(B), the clock number counted by second unique pattern detector 152 becomes "20" between adjacent rising edges of unique pattern 2, matches one of the first prescribed numbers, becomes "10" between other adjacent rising edges, and does not match any of the first prescribed numbers. When second unique pattern detector 152 detects unique pattern 2, enable signal generator 153 lowers (activates) the enable signal (SSCS) at predetermined timing Y. Meanwhile, as illustrated in (1) of FIG. 10(B), the clock number counted in first unique pattern detector 151 becomes "10" or "15" between any adjacent falling edges, and does not match any of the first prescribed numbers. Therefore, first unique pattern detector 151 cannot detect the unique pattern. In this manner, in a case where the two-wire cable is reversely connected, only unique pattern 2 of which the sampling clock number is unique is detected in received data processor 113 (first unique pattern detector 151 and second unique pattern detector 152).

In addition, the received waveform of FIG. 10(B) is obtained by inverting the received waveform of FIG. 10(A), and in a case where the unique pattern in which the clock number between the falling edges becomes a first prescribed number in a case of the normal polarity exists, inevitably, the unique pattern in which the clock number between the rising edges becomes the first prescribed number in a case of the inversion polarity exists. In addition, in this case, the disposition position and the timing of unique pattern 1 and unique pattern 2 are the same as each other, and timing Z and timing Y match each other (timing 510 in FIG. 9) at which the enable signal (SSCS) is lowered (activated).

### Flow of Inversion Detection Processing of Two-wire Cable

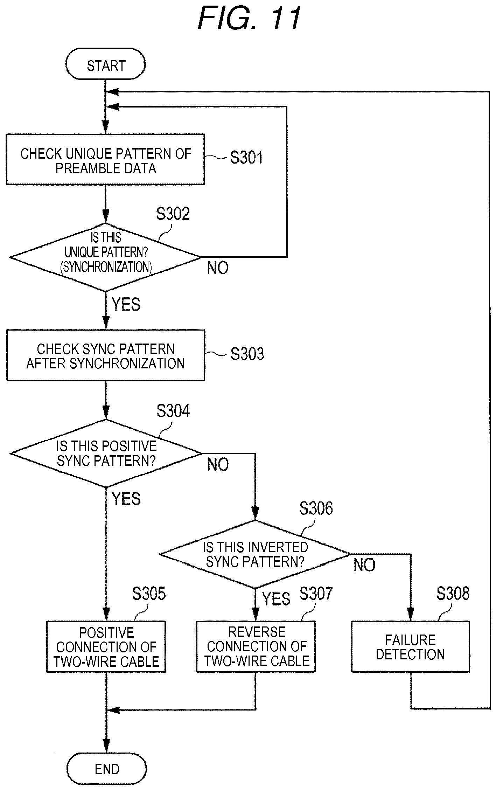

Next, the flow of the inversion detection processing of the two-wire cable in lobby entrance slave device 100 (received data processor 113 and connected state detector 134) will be described with reference to FIG. 11.

In step S301, received data processor 113 performs the sampling of the preamble data included in the downlink signal before demodulation output from reception driver 111 by the clock of first clock generator 131 by first unique pattern detector 151 and second unique pattern detector 152, and performs checking of the unique pattern of the preamble data based on the clock number of a measurer which is any one between the adjacent falling edges or the adjacent rising edges.

In a case where the unique pattern can be detected (S302: YES), it is determined that the bit synchronization is taken, the flow proceeds to S303, and in a case where the unique pattern cannot be detected (S302: NO), the flow returns to S301 and the unique pattern is checked again.

In S303, connected state detector 134 checks the sync pattern of the received data output from data reproducer 133.

In a case where the sync pattern of the received data matches the positive connection check sync pattern (first sink pattern) (S304: YES), in S305, connected state detector 134 determines that the two-wire cable is positively connected and terminates the detection processing.

In addition, in a case where the sync pattern of the received data matches the reverse connection check sync pattern (second sync pattern) obtained by inverting the positive connection check sync pattern (S304: NO, S306: YES), in S307, connected state detector 134 determines that the two-wire cable is reversely connected and terminates the detection processing.

In addition, in a case where the sync pattern of the received data does not match either of the positive connection check sync pattern or the reverse connection check sync pattern (S304: NO, S306: NO), in S308, connected state detector 134 determines that the detection of the sync pattern fails, the flow returns to S301, and the unique pattern is checked again.

### Sequence of Connection Processing of Synchronization Type

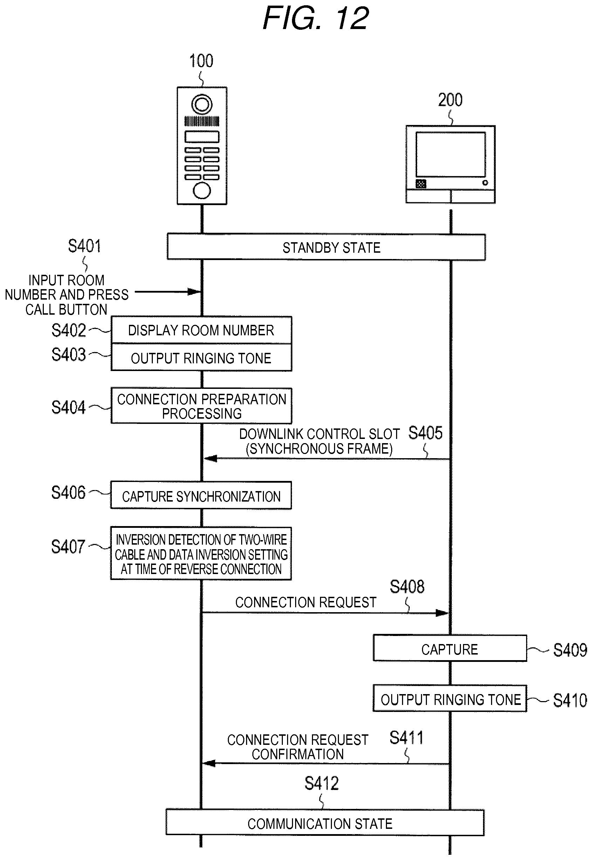

Next, in the synchronous type, the sequence in a case where the connection is successful will be described with reference to FIG. 12. In addition, in a case of the synchronization type, indoor monitor master device 200 always periodically transmits the downlink control slot as a beacon.

In a standby state, in a case where the visitor performs the operation of inputting the room number and pressing the call button on key input 102 of lobby entrance slave device 100 (S401), lobby entrance slave device 100 displays the room number on the liquid crystal display of display 115 (S402), and outputs a ringing tone from speaker 103 (S403).

In addition, lobby entrance slave device 100 performs connection preparation processing of linking (opening the communication path) a cable path to indoor monitor master device 200 that corresponds to the room number by controlling cable selection connector 101 (S404). In this state, lobby entrance slave device 100 receives the downlink control slot from indoor monitor master device 200 (S405) and captures the synchronization with indoor monitor master device 200 (S406).

After capturing the synchronization, lobby entrance slave device 100 performs two-wire cable inversion detection, and in a case where the two-wire cable is reversely connected, data inversion setting for inverting the polarities of each of the received data and the transmitted data is performed (S407). In addition, lobby entrance slave device 100 transmits the connection request to indoor monitor master device 200 in the prescribed time slot in a synchronous frame (S408).

When capturing the connection request (S409), indoor monitor master device 200 outputs the ringing tone from speaker 203 (S410) and transmits connection request confirmation to lobby entrance slave device 100 in a designated time slot in the synchronous frame (S411).

By the above-described processing, lobby entrance slave device 100 and indoor monitor master device 200 are brought into a communication state (S412).

After this, in a case where lobby entrance slave device 100 transmits the audio data and the image data to indoor monitor master device 200 by the uplink packet and the resident performs the operation of pressing the response button of indoor monitor master device 200, indoor monitor master device 200 transmits the audio data to lobby entrance slave device 100 by the downlink packet. Accordingly, it becomes possible to make a call using the image data and the audio data from lobby entrance slave device 100 and the audio data from indoor monitor master device 200. As the resident presses an end button of indoor monitor master device 200 after the end of the call, the communication state between lobby entrance slave device 100 and indoor monitor master device 200 is completed, and both are again in a standby state.

In addition, in the communication state, at the timing of a case where the resident performs an operation of pressing the response button of indoor monitor master device 200, and the like, the ringing tone from speaker 103 of lobby entrance slave device 100 and the ringing tone from speaker 203 of indoor monitor master device 200 are stopped, and it becomes possible to make a call between indoor monitor master device 200 and lobby entrance slave device 100.

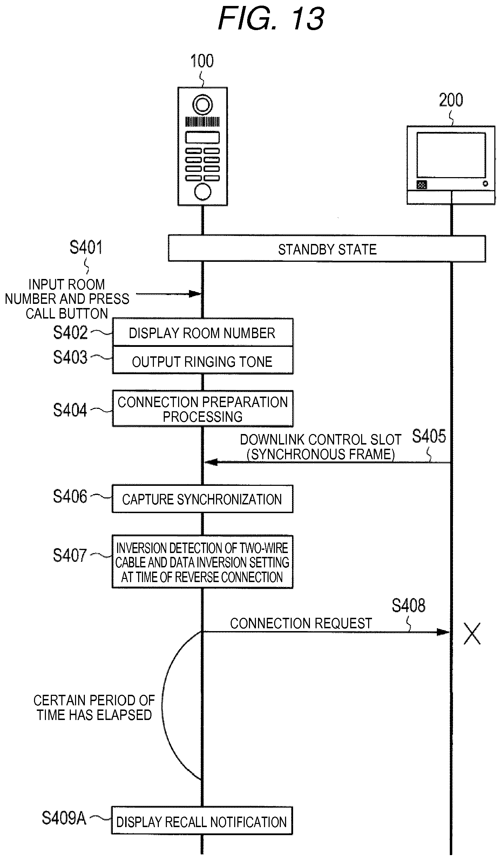

Next, in the synchronization type, the sequence in a case where the connection fails will be described with reference to FIG. 13. In addition, in FIG. 13, the sequence from S401 to S408 is common to those in FIG. 12.

In FIG. 13, it is assumed that the connection request transmitted from lobby entrance slave device 100 cannot be captured by indoor monitor master device 200 in S408. In this case, the connection request confirmation is not transmitted from indoor monitor master device 200 to lobby entrance slave device 100, and lobby entrance slave device 100 cannot be connected to indoor monitor master device 200.

In a case where lobby entrance slave device 100 cannot receive the connection request confirmation even when a certain period of time has elapsed after transmitting the connection request, on the liquid crystal display of display 115, a message (recall notification) for urging retry of input of the room number and pressing of the call button again is displayed with respect to the visitor (S409A).

### Sequence of Connection Processing of Asynchronization Type

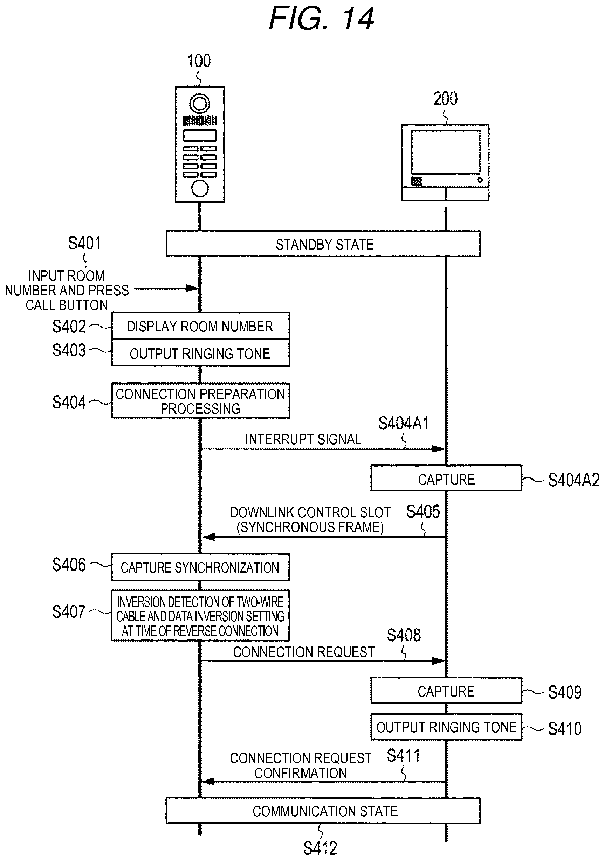

Next, in the asynchronization type, the sequence in a case where the connection is successful will be described with reference to FIG. 14. In addition, in FIG. 14, steps common to those in FIG. 12 will be given the same reference numerals as those in FIG. 12, and the description thereof will be omitted.

In a case of the asynchronous type, as illustrated in FIG. 14, lobby entrance slave device 100 transmits the interrupt signal to indoor monitor master device 200 (S404A1) after the connection preparation processing (S404).

After capturing the interrupt signal (S404A2), indoor monitor master device 200 transmits the downlink control slot (S405). In the asynchronization type (FIG. 14), the sequence after S405 is common to that of the synchronization type (FIG. 12).

In addition, in FIG. 14, the interrupt signal (S404A1) may also serve as the connection request (S408).

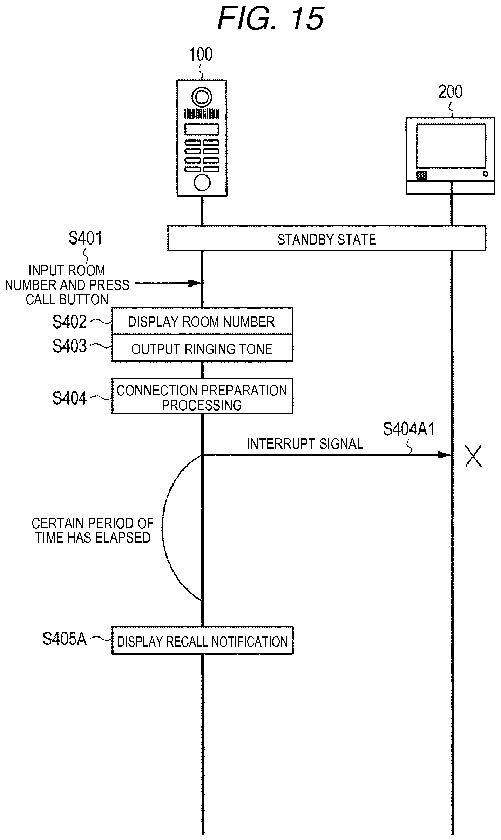

Next, in the asynchronization type, the sequence in a case where the connection fails will be described with reference to FIG. 15. In addition, in FIG. 15, the sequence from S401 to S404A1 is common to those in FIG. 14.

In FIG. 15, it is assumed that the interrupt signal transmitted from lobby entrance slave device 100 cannot be captured by indoor monitor master device 200 in S404A1. In this case, the downlink control slot is not transmitted from indoor monitor master device 200 to lobby entrance slave device 100, and lobby entrance slave device 100 cannot be connected to indoor monitor master device 200.

In a case where lobby entrance slave device 100 cannot capture the downlink control slot even when a certain period of time has elapsed after transmitting the interrupt signal, on the liquid crystal display of display 115, a message (recall notification) for urging pressing of the call button again is displayed with respect to the visitor (S405A).

### Flow of Connection Processing

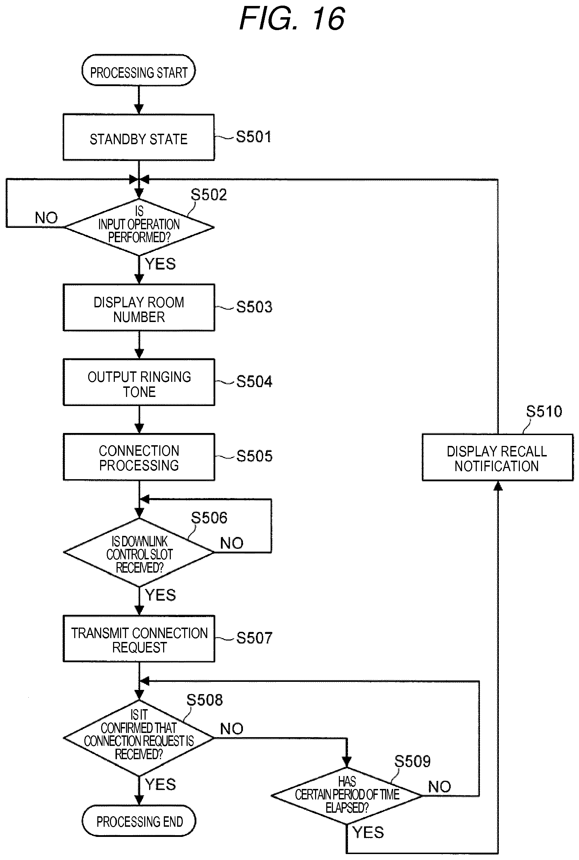

Next, the flow of the connection processing in lobby entrance slave device 100 will be described with reference to FIG. 16.

In a standby state (S501), in a case where the visitor performs the input operation of inputting the room number and pressing the call button (S502: YES), lobby entrance slave device 100 displays the room number on the liquid crystal display of display 115 (S503) and outputs the ringing tone from speaker 103 (S504).

In addition, lobby entrance slave device 100 performs the connection processing with indoor monitor master device 200 that corresponds to the room number (S505), and when receiving the downlink control slot from indoor monitor master device 200 (S506: YES), lobby entrance slave device 100 transmits the connection request to indoor monitor master device 200 (S507).

After this, in a case where lobby entrance slave device 100 receives the connection request confirmation from indoor monitor master device 200 (S508: YES), lobby entrance slave device 100 is connected to indoor monitor master device 200 (termination of processing). Meanwhile, in a case where lobby entrance slave device 100 cannot receive the connection request confirmation from indoor monitor master device 200 even when a certain period of time has elapsed after transmitting the connection request (S508: NO, S509: YES), on the liquid crystal display of display 115, a message (recall notification) for urging retry of input of the room number and pressing of the call button again is displayed with respect to the visitor (S510). The flow returns to S502.

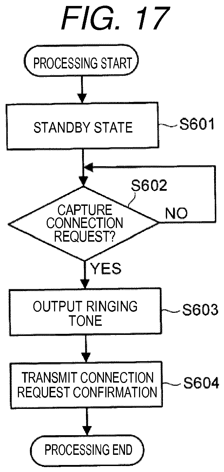

Next, the flow of the connection processing in indoor monitor master device 200 will be described with reference to FIG. 17.

In a standby state (S601), after transmitting the downlink control slot, in a case where the connection request from lobby entrance slave device 100 is captured (S602: YES), indoor monitor master device 200 outputs the ringing tone from speaker 203 (S603), and transmits the connection request confirmation to lobby entrance slave device 100 (S604).

### Requirement of Crystal Oscillation Frequency

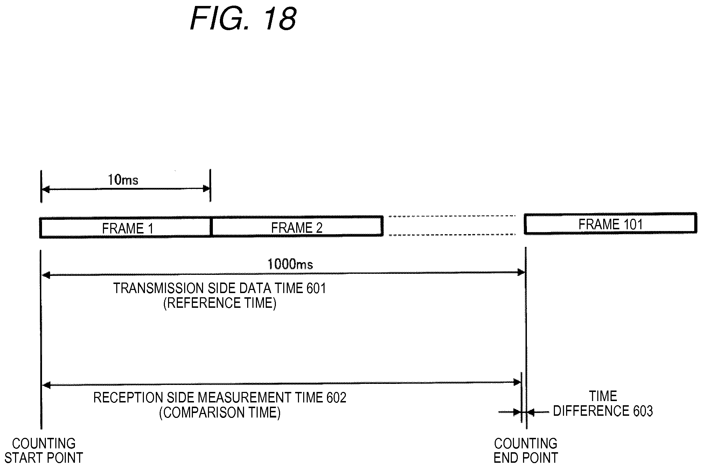

Next, the requirement of the crystal oscillation frequency of the embodiment will be described with reference to FIG. 18.

In a case where the time slot of the data generated by performing the sampling by the clock generated with reference to the crystal oscillation frequency of the device on the transmission side is sampled by the clock generated with reference to the crystal oscillation frequency of the device on the reception side, a system of the embodiment is a system which is resynchronized with the first bit of the sync pattern in the time slot, and thus, in the last bit of the data after 1536 bits (= (2 + 8 + 180 + 2) x 8) from the first bit of the sync pattern in the same time slot, the deviation of the clock on the reception side with respect to the clock on the transmission side is maximized. In addition, in the system, in the next time slot, resynchronization is performed with the first bit of the sync pattern.

Here, as a system requirement, a tolerable range of the deviation of the clock in a case of sampling the 1536 bits of the data of the time slot is, for example, less than 1/5 (approximately 1/10) of the 1-bit data length, that is, within ± 64 ppm = 1/1536 x 1/5 x 1/2). In a case where the clock on the transmission side is set as a standard, when the crystal oscillation frequency on the reception side is adjusted such that the deviation of the clock on the reception side always becomes within ± 64 ppm, the device on the reception side can perform the decoding processing with respect to the received data.

Here, in the embodiment, as illustrated in FIG. 18, at the prescribed data number (for example, the data number for 100 frames), time difference 603 between transmission side data time 601 and reception side measurement time 602 is detected, and in accordance with the time difference, the crystal oscillation frequency on the reception side is adjusted. Transmission side data time 601 is the time (first time) occupied by the prescribed data number of the transmission data sampled by the communication clock generated with reference to the crystal oscillation frequency of the device on the transmission side. Reception side measurement time 602 is the time (second time) that corresponds to the prescribed data number counted by the communication clock generated with reference to the crystal oscillation frequency of the device on the reception side.

Here, the transmission side data that serves as the reference time is set as the data sequence of indoor monitor master device 200, the reception side data that serves as the comparison time is set as the data sequence generated by lobby entrance slave device 100 and door-front entrance slave device 300.

In addition, when it is intended to detect the time difference between the transmission side data time and the reception side measurement time in one time slot or in one frame (24 time slots), accumulation of the difference is small and the time difference is short, and thus, a high-speed clock is required.

Further, in the embodiment, the minimum range of the adjustment width is determined in advance in accordance with the system requirement, for example, MAX ± 5 ppm.
The frequency of the measurement clock for detecting the time difference is determined by the minimum range of the adjustment width.

### Internal Configuration of Crystal Oscillation Frequency Controller

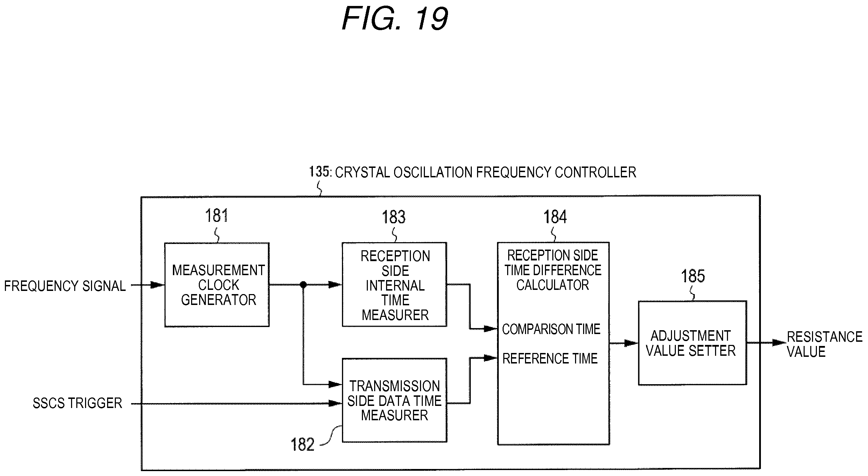

Next, the details of the internal configuration of crystal oscillation frequency controller 135 of lobby entrance slave device 100 will be described with reference to FIG. 19. As illustrated in FIG. 19, crystal oscillation frequency controller 135 includes measurement clock generator 181, transmission side data time measurer 182, reception side internal time measurer 183, reception side time difference calculator 184, and adjustment value setter 185.

Measurement clock generator 181 generates a measurement clock of a frequency (for example, 48 MHz) based on the minimum range of the adjustment width with reference to the crystal oscillation frequency of crystal oscillator 136, and continuously outputs the measurement clock to reception side internal time measurer 183 and transmission side data time measurer 182. Here, the frequencies of the measurement clock and the communication clock are known values generated with reference to the crystal oscillation frequency of the device on the reception side, and the frequency of the measurement clock may be equal to the frequency of the communication clock.

Transmission side data time measurer 182 measures the time occupied by the prescribed data number of the reproduced data output from data reproducer 133 (the time from the count start point of the received data to the count end point) (hereinafter, referred to as "reference time"). The reference time corresponds to the time (601 of FIG. 18) occupied by the prescribed data number of the transmission data sampled by the communication clock generated based on the oscillation frequency on the inside of indoor monitor master device 200 which is the device on the transmission side.

Reception side internal time measurer 183 converts the time that corresponds to the prescribed data number counted by the communication clock into the count number of the measurement clock, counts the measurement clock output from measurement clock generator 181 only by the number that corresponds to the prescribed data number after the count start point, and measures the time (602 of FIG. 18) (hereinafter, referred to as "comparison time") from the start to the end of the counting of the measurement clock. In addition, there are no particular limitations on the count start points in transmission side data time measurer 182 and reception side internal time measurer 183.

Reception side time difference calculator 184 calculates a difference (603 in FIG. 18) between the reference time measured by transmission side data time measurer 182 and the comparison time measured by reception side internal time measurer 183.

In order to reduce the deviation between the reference time and the comparison time, adjustment value setter 185 sets the set value that corresponds to the time difference calculated by reception side time difference calculator 184 in register 199 (refer to FIG. 20) of crystal oscillator 136, and adjusts the oscillation frequency of crystal oscillator 136. In addition, in a case where the time difference calculated by reception side time difference measurer 184 becomes equal to or less than the predetermined threshold value, adjustment value setter 185 may stop the adjustment of the oscillation frequency. Further, hysteresis may be given to the threshold value.

Adjustment value setter 185 stores the set value that corresponds to the oscillation frequency of the crystal oscillator adjusted at the previous call for each indoor monitor master device 200, in memory 114. In addition, when the room number information and the call signal are input from key input 102, adjustment value setter 185 reads the set value for indoor monitor master device 200 that corresponds to the room number information by memory 114, and sets the set value in register 199.

Here, although the internal configuration of crystal oscillation frequency controller 135 of lobby entrance slave device 100 has been described here, the internal configuration of crystal oscillation frequency controller 335 of door-front entrance slave device 300 is also the same.

In addition, the crystal oscillation frequency of indoor monitor master device 200 is adjusted to the center value at the time of factory shipment.

In addition, in the embodiment, the adjustment operation of the above-described crystal oscillation frequency in lobby entrance slave device 100 and door-front entrance slave device 300 can be performed in the background in parallel with the received data processing in a normal operation. Accordingly, it is unnecessary to set the time for adjustment, and high-accuracy digital communication can be performed as long as the communication is performed within a variation range of the initial adjustment in which the bit error of received data is not generated in the normal reception operation.

Further, in the embodiment, instead of the measurement clock generated by measurement clock generator 181, the clock generated by first clock generator 131 may be used as the measurement clock.

### Internal Configuration of Crystal Oscillator

Next, the details of the internal configuration of crystal oscillator 136 of lobby entrance slave device 100 will be described with reference to FIG. 20. As illustrated in FIG. 20, crystal oscillator 136 includes a general CMOS inverter crystal oscillation circuit including crystal oscillator 190 (oscillation frequency X1), inverter 191, feedback resistor 192 (resistance value Rf), damping resistor 193 (resistance value Rd), buffer 194, input capacitance 195 (capacitance value C2), and output capacitance 196 (capacitance value C3), and in addition to this, input capacitance 197 (capacitance value C1), output capacitance 198 (capacitance value C4), and register 199 are added.

Capacitance value C1 of input capacitance 197 and capacitance value C4 of output capacitance 198 are set in advance so as to become the prescribed values that correspond to the initial value of register 199.

When a new value is set in register 199 by crystal oscillation frequency controller 135 (adjustment value setter 185), in accordance with the value, capacitance value C1 of input capacitance 197 or capacitance value C4 of output capacitance 198 is adjusted. Accordingly, the oscillation frequency of crystal oscillator 136 is finely adjusted to match the crystal oscillation frequency of indoor monitor master device 200 on the transmission side. A voltage amplitude signal (frequency signal) of the oscillation frequency which is an output signal of crystal oscillator 136 is output to crystal oscillation frequency controller 135 and first clock generator 131.

In addition, crystal oscillator 336 of door-front entrance slave device 300 and the crystal oscillator (not illustrated) of indoor monitor master device 200 are also the same.

### Non-polarization of Two-wire Cable

A transmitted and received signal of the digital communication may be inverted either on the transmission side or on the reception side. Hereinafter, a configuration for realizing the non-polarization between lobby entrance slave device 100 and indoor monitor master device 200 will be exemplified.

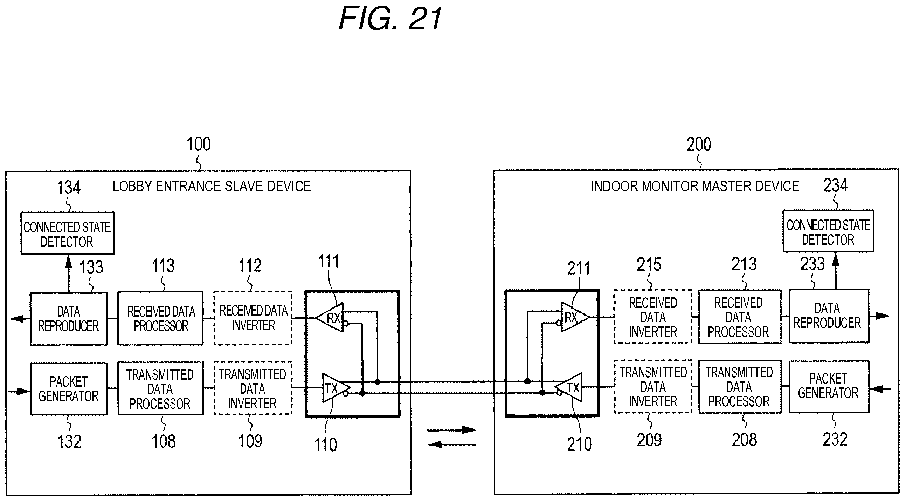

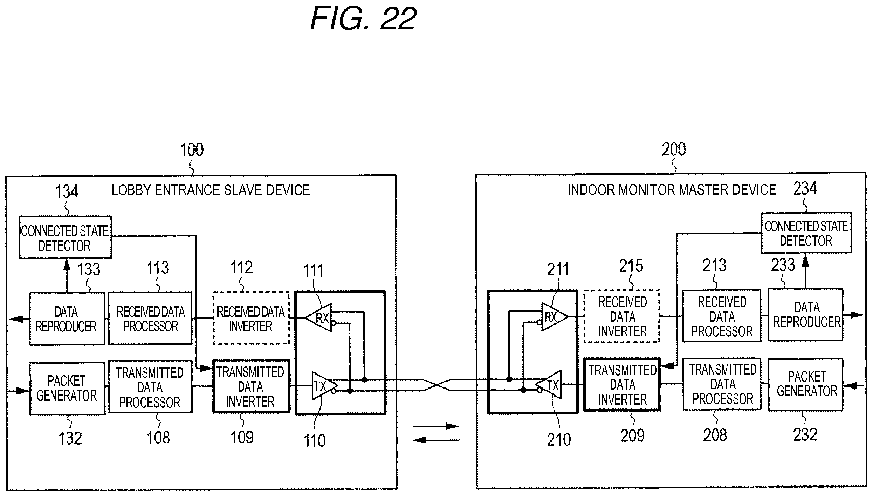

FIG. 21 is a schematic view illustrating an aspect when the two-wire cable is in a positively connected state. FIGS. 22 to 26 are schematic views illustrating an aspect when the two-wire cable is in a reversely connected state.

In addition, in FIGS. 22 to 26, parts other than those closely related to the non-polarization of the digital communication using the two-wire cable are omitted. Further, in FIGS. 22 to 25, it is assumed that each of lobby entrance slave device 100 and indoor monitor master device 200 (hereinafter, collectively referred to as "device" as appropriate) has the transmitted data inverter and the received data inverter. In the above-described description, the configuration in which indoor monitor master device 200 does not have the transmitted data inverter and the received data inverter has been described, but in the following description, a case where indoor monitor master device 200 has transmitted data inverter 209 and received data inverter 215 will also be described.

As described above, the transmitted data inverter inverts or does not invert the transmitted signal output from the transmitted data processor in accordance with the inversion control signal (INVCON) output from the connected state detector, and outputs the transmitted signal to the transmission driver.

In addition, as described above, the received data inverter inverts or does not invert the received signal output from the reception driver in accordance with the inversion control signal (INVCON) output from the connected state detector, and outputs the received signal to the received data processor.

In addition, in FIGS. 21 to 25, in the transmitted data inverter and the received data inverter, one in a state where the signal inversion is not performed (state where the signal is passed therethrough as it is) is indicated by broken lines. Further, the two lines of the two-wire cable in FIGS. 21 to 26 indicate the two cables that configure the two-wire cable.

As illustrated in FIG. 21, in a case where the two-wire cable is positively connected, the polarities match each other between the devices on both sides of the two-wire cable. Therefore, both devices do not need to invert for either the uplink signal or the downlink signal. Therefore, transmitted data inverters 109 and 209 and received data inverters 112 and 215 of each device do not perform the signal inversion.

Meanwhile, as illustrated in FIGS. 22 to 26, in a case where the two-wire cable is reversely connected, the polarity is inverted between the devices on both sides of the two-wire cable. Therefore, for both the uplink signal and the downlink signal, it is necessary to perform the signal inversion in either device.

FIG. 22 illustrates an example in which the reverse connection is detected by connected state detectors 134 and 234 in both devices, and when the reverse connection is detected, transmitted data inverters 109 and 209 start the signal inversion. In this case, lobby entrance slave device 100 and indoor monitor master device 200 do not necessarily need to include received data inverters 112 and 215.

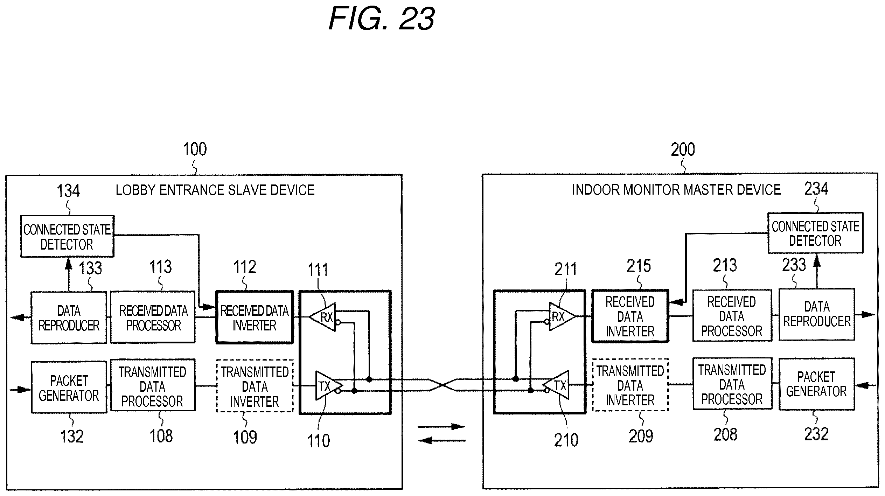

Meanwhile, FIG. 23 illustrates an example in which received data inverters 112 and 215 start the signal inversion when the reverse connection is detected in both devices. In this case, lobby entrance slave device 100 and indoor monitor master device 200 do not necessarily need to include transmitted data inverters 109 and 209.

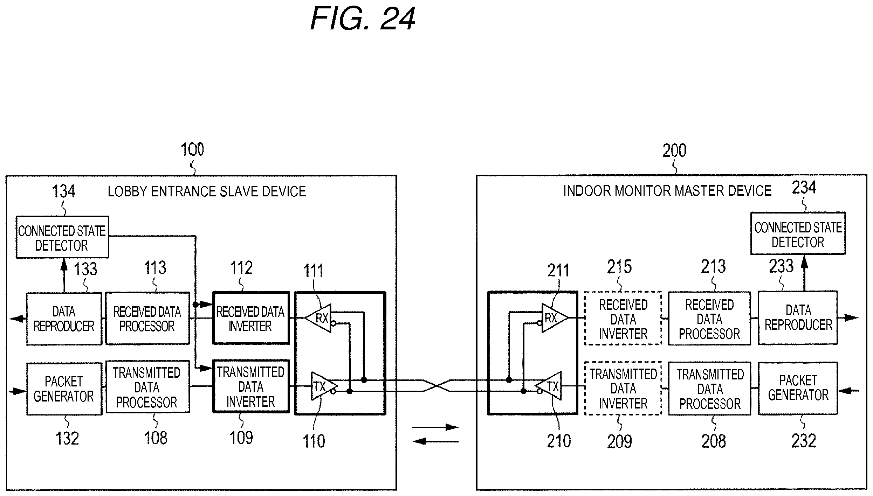

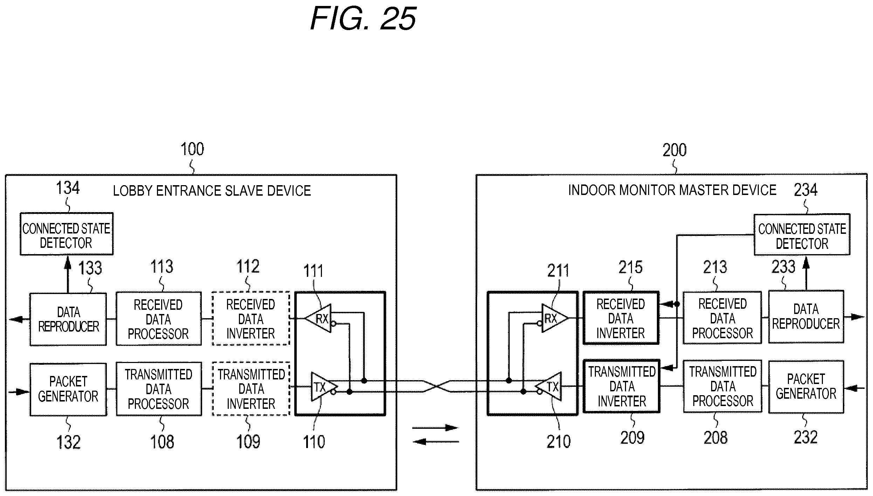

Otherwise, for example, as illustrated in FIGS. 24 and 25, in only one device, the reverse connection detection may be performed by the connected state detector, and when the reverse connection is detected, in the transmitted data inverter and the received data inverter of the device, the signal inversion may be started. In this case, the other device does not necessarily need to include the connected state detector, the transmitted data inverter, and the received data inverter.

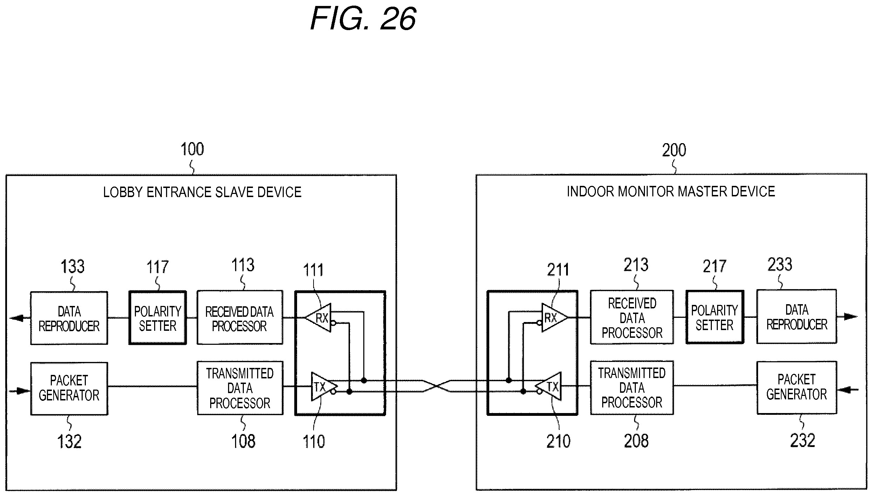

Furthermore, as illustrated in FIG. 26, lobby entrance slave device 100 may include polarity setter 117 instead of transmitted data inverter 109, received data inverter 112, and connected state detector 134, and indoor monitor master device 200 may include polarity setter 217 instead of transmitted data inverter 209, received data inverter 215, and connected state detector 234. In addition, door-front entrance slave device 300 may include the polarity setter (not illustrated) similar to polarity setter 117 instead of transmitted data inverter 309, received data inverter 312, and connected state detector 334. Polarity setter 117 of lobby entrance slave device 100 is disposed between received data processor 113 and data reproducer 133. Polarity setter 217 of indoor monitor master device 200 is disposed between received data processor 213 and data reproducer 233. The polarity setter of door-front entrance slave device 300 is disposed between received data processor 313 and data reproducer 333.

In this case, each device determines whether the two-wire cable is positively connected or reversely connected using the sync pattern in the data after decoding the received data, and sets the polarity in real time.

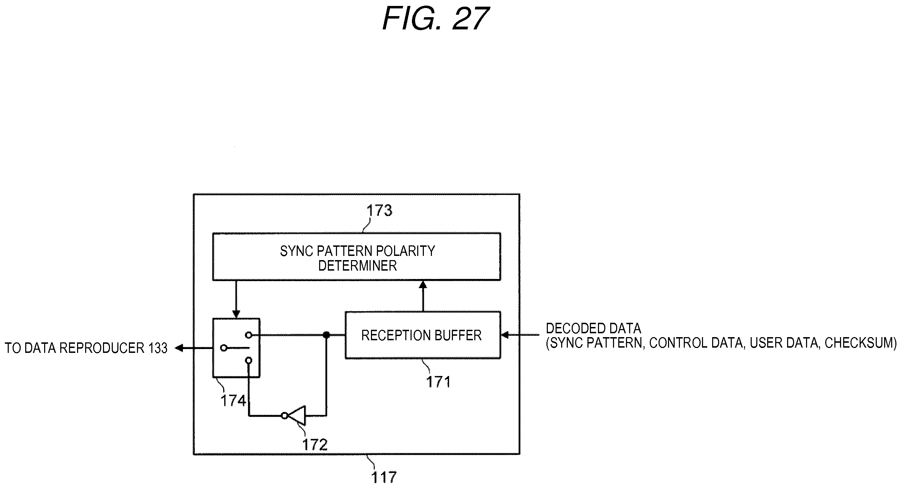

FIG. 27 is a block diagram illustrating the internal configuration of polarity setter 117. As illustrated in FIG. 27, polarity setter 117 includes reception buffer 171, data inverter 172, sync pattern polarity determiner 173, and switchover switch 174. In addition, polarity setter 217 also has the same internal configuration as that of polarity setter 117.

Reception buffer 171 acquires the downlink packet (decoded data) output from received data processor 113, and outputs the sync pattern included in the downlink packet to sync pattern polarity determiner 173. In addition, reception buffer 171 temporarily stores the data portion (control data, user data, and checksum) after the sync pattern. Data inverter 172 inverts the polarity of the data portion stored in reception buffer 171.

Sync pattern polarity determiner 173 stores the positive connection check sync pattern and the reverse connection check sync pattern, and collates the sync pattern of the received data output from reception buffer 171 with the positive connection check sync pattern and the reverse connection check sync pattern (two-wire cable inversion detection). Sync pattern polarity determiner 173 determines that the two-wire cable is positively connected in a case where the sync pattern of the received data and the positive connection check sync pattern completely match each other, and determines that the two-wire cable is reversely connected in a case where the sync pattern of the received data and the reverse connection check sync pattern completely match each other. In addition, sync pattern polarity determiner 173 controls switchover switch 174 based on the determination result.

Switchover switch 174 switches a connection destination based on the control of sync pattern polarity determiner 173, and outputs either the data stored in reception buffer 171 or the data generated by data inverter 172. Specifically, in a case where it is determined that the two-wire cable is positively connected in sync pattern polarity determiner 173, switchover switch 174 is connected to reception buffer 171 and outputs the data stored in reception buffer 171 to data reproducer 133 by the logic as it is. Meanwhile, in a case where it is determined that the two-wire cable is reversely connected in sync pattern polarity determiner 173, switchover switch 174 is connected to data inverter 172 and outputs the data generated by data inverter 172 to data reproducer 133.

Accordingly, logic determination and logic correction can be performed with respect to the data input during the normal communication in real time by processing only on the reception side. Therefore, in each device, even in a case where the received data is input by either positive logic or inverse logic, it is possible to enable the normal communication and to prevent deterioration of the communication quality.

Although the description above has been made using lobby entrance slave device 100, the same is applied to indoor monitor master device 200 and door-front entrance slave device 300.

### Effect of Embodiment 1

As described above, in the embodiment, lobby entrance slave device 100 has the plurality of terminals T12-1 to T12-N connected to each of the plurality of indoor monitors master devices via the two-wire cable wired in a star shape. In addition, in a case of inputting the room number information and the call signal, lobby entrance slave device 100 is connected to terminal T12-i connected to indoor monitor master device 200 that corresponds to the room number information, and transmits the connection request to indoor monitor master device 200 after receiving the downlink control slot from indoor monitor master device 200. Accordingly, in the door phone system for a multi-dwelling house, by utilizing the existing two-wire cable wired in a star shape, and by using the connection request from lobby entrance slave device 100 as a trigger, it is possible to perform the digital communication between lobby entrance slave device 100 and indoor monitor master device 200.

In addition, in the embodiment, in a case of inputting the room number information and the call signal, lobby entrance slave device 100 outputs the ringing tone from speaker 103 and displays the message information indicating the room number on display 115. Until now, in the door phone system, a system which outputs the ringing tone after lobby entrance slave device 100 and indoor monitor master device 200 are connected to each other is generally used. In this case, the ringing tone is not output until the connection processing is completed even when the room number is input and the call button is pressed, and thus, the visitor becomes anxious about whether the call is made when it takes time to complete the connection processing. Meanwhile, in the embodiment, when the room number is input and the call button is pressed, the ringing tone can be immediately output and the room number can be displayed, and thus, the visitor is not caused to feel the above-described anxiety.

Further, in the embodiment, in a case where the connection request confirmation cannot be received even after a predetermined time has elapsed after the connection request is transmitted, the message for urging the input of the room number and the pressing of the call button is displayed on display 115. Accordingly, in a case where the connection fails, it is possible to urge the visitor to perform the calling operation again, and it is possible to reduce the time until the connection.

In addition, in the embodiment, crystal oscillation frequency controller 135 controls the oscillation frequency of crystal oscillator 136 by setting the set value of register 199, and stores the set value in memory 114 for each indoor monitor master device 200. In addition, in a case where the room number information is input, crystal oscillation frequency controller 135 sets the set value for indoor monitor master device 200 that corresponds to the room number information stored in memory 114, in register 199. Accordingly, the adjustment time of the oscillation frequency can be shortened.

### Variation of Embodiment 1

In the embodiment, indoor monitor master device 200 can communicate with both lobby entrance slave device 100 and door-front entrance slave device 300 simultaneously, and also can display the video data from lobby entrance slave device 100 and the video data from door-front entrance slave device 300 on two screens.

FIG. 28 illustrates an example of time slot allocation within a basic communication frame in this case. In the example of FIG. 28, the basic communication frame is configured of 24 slots "SL0" to "SL23". "SL1" to "SL18" of the basic communication frame are uplink slots, and "SL0" and "SL19" are downlink slots. In addition, "SL20" to "SL23" are reserved slots and may be used as command time slots. In particular, "SL23" is used for both the uplink and the downlink as the designated time slot in the synchronous frame.

Among uplink slots "SL1" to "SL18", "SL1" to "SL16" are image time slots and "SL17" and "SL18" are audio time slots.

Among the image time slots, "SL1", "SL3", "SL5", "SL7", 'SL9" "SL11" "SL13", and "SL15" are time slots allocated for the video (ch1) from lobby entrance slave device 100, and "SL2", "SL4", "SL6", "SL8", "SL10", "SL12", "SL14", and "SL16" are time slots allocated for the video (ch2) from door-front entrance slave device 300.

Among the audio time slots, "SL17" is a time slot allocated for the audio (ch1) from lobby entrance slave device 100, and "SL18" is a time slot allocated for the audio (ch2) from door-front entrance slave device 300.

The downlink slot "SL0" is a control slot. Further, the downlink slot "SL19" is a slot allocated for the audio from indoor monitor master device 200.

In this manner, by separating the uplink image time slots into two series, indoor monitor master device 200 can receive both the video data from lobby entrance slave device 100 and the video data from door-front entrance slave device 300.

In addition, depending on the selection by the resident, indoor monitor master device 200 can also output one of the audio data from lobby entrance slave device 100 and the audio data from door-front entrance slave device 300.

In addition, depending on the selection by the resident, indoor monitor master device 200 can also display one of the video data from lobby entrance slave device 100 and the video data from door-front entrance slave device 300.

Further, depending on the selection by the resident, indoor monitor master device 200 can also transmit the audio data to one of lobby entrance slave device 100 and door-front entrance slave device 300, and can also transmit the audio data to both of lobby entrance slave device 100 and door-front entrance slave device 300.

### Embodiment 2

In Embodiment 2, since indoor monitor master device 200 and lobby entrance slave device 100 which are described in Embodiment 1 respectively have a part to be changed, hereinafter, indoor monitor master device 200A and lobby entrance slave device 100A are employed.

In Embodiment 2, a system which is also capable of connecting lobby entrance slave device 100A and indoor monitor master device 200A to each other according to a request from indoor monitor master device 200A will be described. In addition, since the system configuration of the embodiment is the same as that of FIG. 1 described in Embodiment 1, the description thereof will be omitted. In addition, since the configuration of door-front entrance slave device 300 of the embodiment is the same as that of FIG. 6 described in Embodiment 1, the description thereof will be omitted.

### Configuration of Lobby Entrance Slave Device

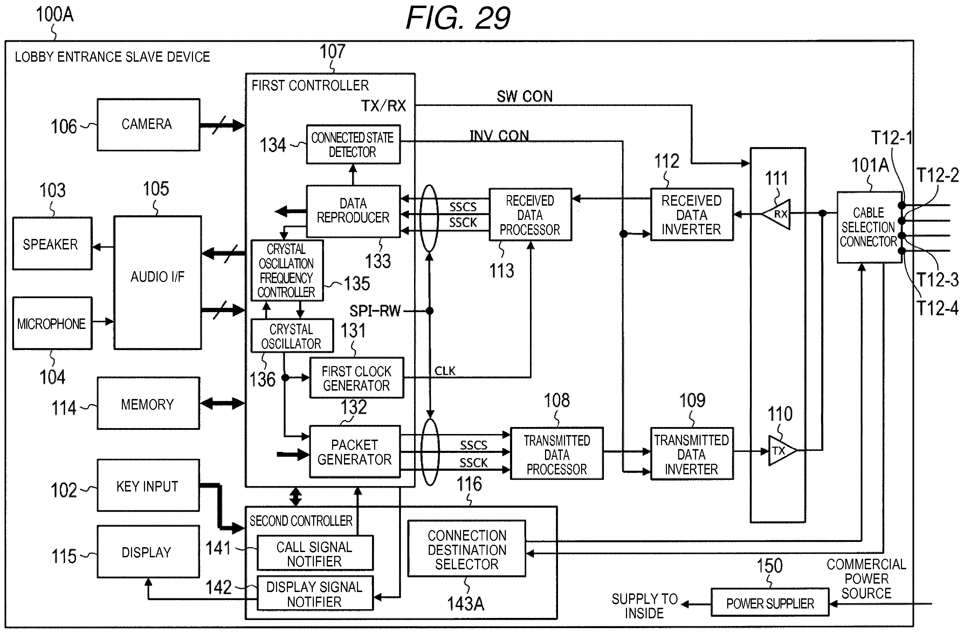

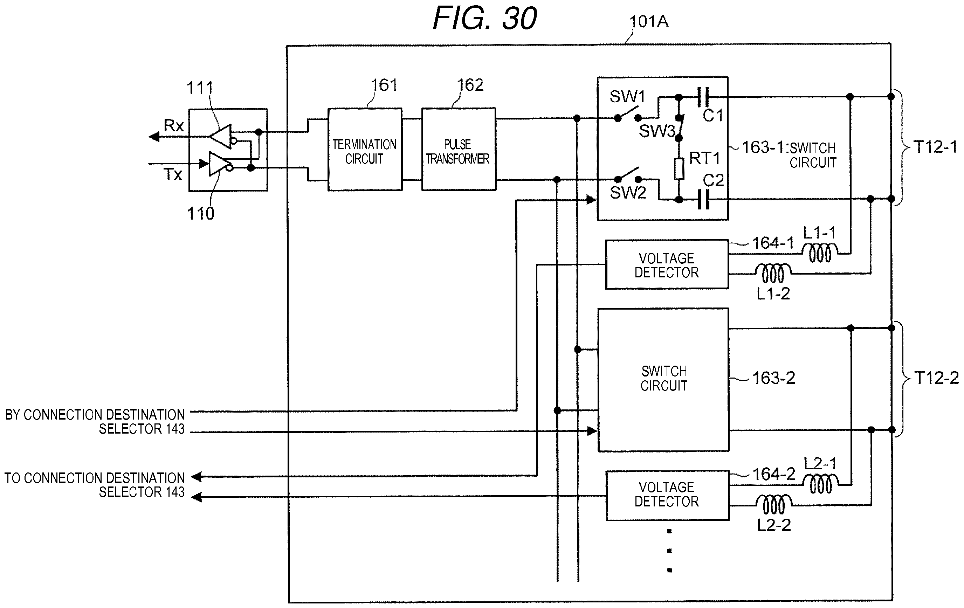

Next, a configuration of lobby entrance slave device 100A of the embodiment will be described with reference to the block diagram of FIG. 29. In addition, in lobby entrance slave device 100A illustrated in FIG. 29, the configuration parts common to those of lobby entrance slave device 100 illustrated in FIG. 3 will be given the same reference numerals as those in FIG. 3, and the description thereof will be omitted. Lobby entrance slave device 100A is different from lobby entrance slave device 100 in that the internal configuration of cable selection connector 101A is different from that of cable selection connector 101 (refer to FIG. 30), and the function is added to cable selection connector 101A and connection destination selector 143A.

In a case where cable selection connector 101A detects that a voltage equal to or higher than a predetermined value is supplied from indoor monitor master device 200A, a monitor control signal indicating indoor monitor master device 200A requested for monitoring is output to connection destination selector 143A.

In a case of inputting the monitor control signal from cable selection connector 101A, connection destination selector 143A selects terminal T12-i to be connected to indoor monitor master device 200A which requests for monitoring, and outputs the route setting signal indicating the selection to cable selection connector 101A. As a result, indoor monitor master device 200A and lobby entrance slave device 100A which request for monitoring are connected to each other.

### Internal Configuration of Cable Selection Connector

Next, the internal configuration of cable selection connector 101A of the embodiment will be described with reference to FIG. 30. In addition, in cable selection connector 101A illustrated in FIG. 30, the configuration parts common to those of cable selection connector 101 illustrated in FIG. 4 will be given the same reference numerals as those in FIG. 4, and the description thereof will be omitted. Cable selection connector 101A adopts a configuration in which voltage detectors 164-1 to 164-N and inductors L1-1 to L1-N and L2-1 to L2-N are added compared to cable selection connector 101.

Here, the inductors L1-1 to L1-N and L2-1 to L2-N function as a filter which allows the DC part on the two-wire cable side to pass therethrough and does not allow the band of the communication data to pass therethrough. Accordingly, only the DC part is input to voltage detectors 164-1 to 164-N, and the communication data is not input because the band has high impedance. Therefore, even when the DC part and the communication data are superimposed on the two-wire cable and a DC is detected by the voltage detectors 164-1 to 164-N, the DC part does not affect the communication data input to switch circuits 163-1 to 163-N.

Voltage detectors 164-1 to 164-N are respectively connected to corresponding indoor monitor master device 200A via the two-wire cable, and detect the voltage from indoor monitor master device 200A at the connection destination. When a trigger for requesting for monitoring in camera 106 of lobby entrance slave device 100A is input from indoor monitor master device 200A by pressing the key of key input 202A or the like, from indoor monitor master device 200A to each of the two-wire cables, a first DC potential and a second DC potential are superimposed. A voltage which is equal to or higher than a predetermined value which is a potential difference between the first potential and the second potential is generated between the two-wire cables. In order to make it possible to perform the detection in a case where the two-wire cable is both positively connected and reversely connected, in a case where an absolute value of the potential difference between the first DC potential and the second DC potential between the two-wire cables becomes a voltage that is equal to or higher than the threshold value, voltage detectors 164-1 to 164-N outputs the monitor control signal indicating the message to connection destination selector 143A. As a result, indoor monitor master device 200A that supplies the voltage which is equal to or higher than the threshold value is selected as the communication partner.

### Configuration of Indoor Monitor Master Device

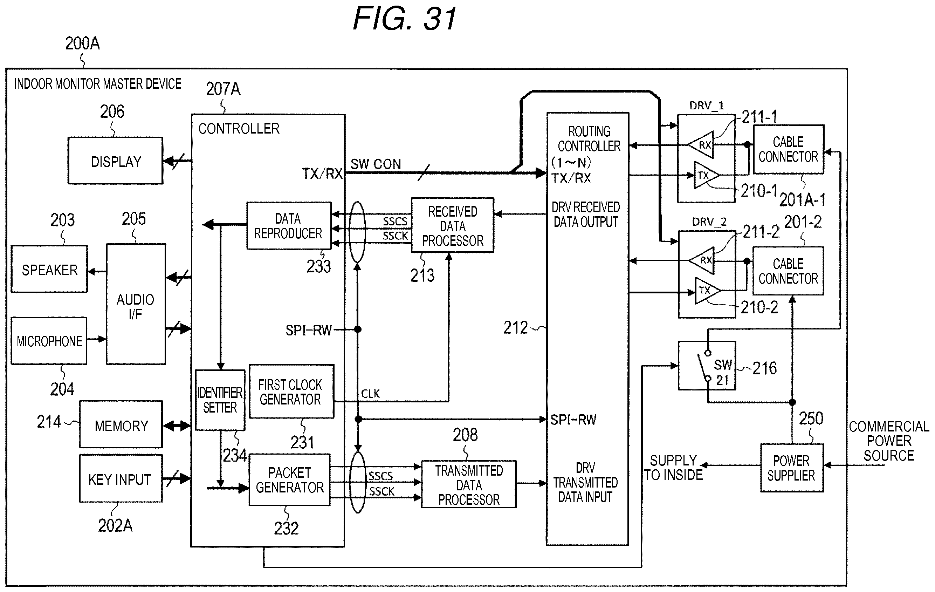

Next, a configuration of indoor monitor master device 200A will be described with reference to the block diagram of FIG. 31. In addition, in indoor monitor master device 200A illustrated in FIG. 31, the configuration parts common to those of indoor monitor master device 200 illustrated in FIG. 5 will be given the same reference numerals as those in FIG. 5, and the description thereof will be omitted. Compared to indoor monitor master device 200, indoor monitor master device 200A adopts a configuration in which connection switch 216 is added, and functions are added to key input 202A and controller 207A. Further, a DC voltage is applied from power supplier 250 to 201A-1 via connection switch 216.

Key input 202A includes a monitor button, and when the monitor button is operated, a monitor request signal indicating that the monitor button is operated, is output to controller 207A.

When inputting the monitor request signal from key input 202A, controller 207A outputs a voltage supply signal for supplying the voltage to lobby entrance slave device 100A to connection switch 216.

Switch SW21 of connection switch 216 is open in a normal state. When inputting the voltage supply signal from controller 207A, connection switch 216 closes switch SW21. Accordingly, a voltage which is equal to or higher than a predetermined value is supplied from indoor monitor master device 200A (cable connector 201A-1) to lobby entrance slave device 100A via the two-wire cable, and the request for monitoring from indoor monitor master device 200A is transmitted to lobby entrance slave device 100A.

### Internal Configuration of Cable Connector

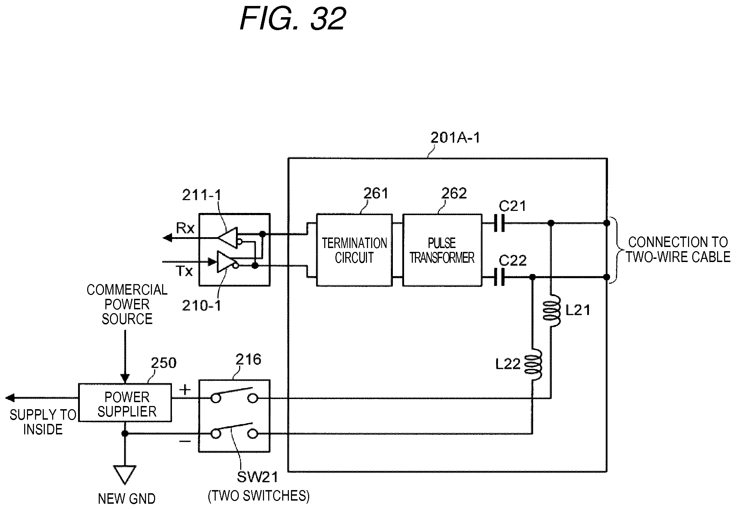

Next, the internal configuration of cable connector 201A-1 of the embodiment will be described with reference to FIG. 32. As illustrated in FIG. 32, cable connector 201-1 includes termination circuit 261, pulse transformer 262, capacitors C21 and C22, and inductors L21 and L22.

Here, inductors L21 and L22 function as a filter which allows the DC part supplied from connection switch 216 side to pass therethrough and does not allow the communication data on the two-wire cable to pass therethrough on connection switch 216 side.

In addition, regarding the superimposition on the DC two-wire cable, the positive side of the output of power supplier 250 is connected to the first input side of switch SW21 of connection switch 216, and the first output side of switch SW21 is input to cable connector 201A-1. In addition, regarding the negative side of the output of power supplier 250 as GND of the indoor monitor master device, the negative side is connected to the second input side of switch SW21 of connection switch 216, and the second output side of switch SW21 is input to cable connector 201A-1. In addition, the two switch circuits of switch SW21 in connection switch 216 operate interlocking with each other.

The downlink signal output from transmission driver 210-1 is transmitted to lobby entrance slave device 100A via termination circuit 261, pulse transformer 262, capacitors C21 and C22, and two-wire cable. The uplink signal transmitted from lobby entrance slave device 100A is received by reception driver 211-1 via the two-wire cable, capacitors C21 and C22, pulse transformer 262, and termination circuit 261.

The voltage which is equal to or higher than the predetermined value that has passed through connection switch 216 is supplied to lobby entrance slave device 100 via inductors L21 and L22 and the two-wire cable.

### Effect of Embodiment 2

As described above, in the embodiment, in a case where it is detected that the voltage which is equal to or higher than the threshold value is being supplied from indoor monitor master device 200A, lobby entrance slave device 100A is connected to terminal T12-i connected to indoor monitor master device 200A and transmits the connection request to indoor monitor master device 200A. Accordingly, in the door phone system for a multi-dwelling house, by utilizing the existing two-wire cable wired in a star shape, it is possible to perform the digital communication between lobby entrance slave device 100A and indoor monitor master device 200A by the request from indoor monitor master device 200A.

In addition, in the embodiment, in indoor monitor master device 200A, the power supply voltage supplied to door-entrance slave device 300 is also supplied to lobby entrance slave device 100A, and accordingly, the request for monitoring is sent to lobby entrance slave device 100A. Accordingly, since the configuration originally provided in indoor monitor master device 200A can be used, it is possible to prevent an increase in size of the device.

### Variation of Embodiment 2

In the embodiment, in a case where there is the request for monitoring from the plurality of indoor monitor master devices 200A (in a case where the voltage which is equal to or higher than the threshold value is supplied) with respect to lobby entrance slave device 100A, connection destination selector 143A may select indoor monitor master device 200A which has performed the request for monitoring earliest as the communication partner.

In this case, since the request for monitoring is later than those of other indoor monitor master devices 200A, disregarded indoor monitor master device 200A may display a message indicating that the monitoring is not possible on display 206, or may output the audio from speaker 203.

In addition, in the embodiment, when indoor monitor master device 200A performs the monitoring using camera 106 of lobby entrance slave device 100A, in a case where the visitor performs an operation of inputting the room number and pressing the call button in lobby entrance slave device 100A, connection destination selector 143A may give priority to the calling and stop the monitoring operation.

In this case, indoor monitor master device 200A of which the monitoring operation has been stopped may display a message that the monitoring is not possible on display 206, or may output the audio from speaker 203.

The disclosure is appropriate for use in the digital communication type door phone system for a multi-dwelling house.

## Claims

1. A lobby entrance slave device (100, 100A) of a door phone system (1) for a multi-dwelling house that is configured to perform digital communication with each of a plurality of indoor monitor master devices (200), comprising:
a plurality of terminals (T12-1, T12-2, T12-3, T12-4) connected to any of the plurality of indoor monitor master devices (200) via a two-wire cable wired in a star shape;
a controller (116) that is configured to select a called destination indoor monitor master device (200) as a communication partner in a case of inputting a signal indicating the called destination indoor monitor master device, and to generate a connection request;
a cable selection connector (101, 101A) that is to be connected to the terminal (T12-1, T12-2, T12-3, T12-4) connected to the indoor monitor master device (200) of the communication partner in accordance with the selection of the controller (116); and
a transmitter (107) that is configured to transmit the connection request to the indoor monitor master device (200) of the communication partner via the cable selection connector (101, 101A) and the two-wire cable.

2. The lobby entrance slave device (100, 100A) of Claim 1,
wherein the controller (116) is configured to take frame synchronization by using a downlink control slot from the indoor monitor master device (200) of the communication partner.

3. The lobby entrance slave device (100, 100A) of Claim 2,
wherein the downlink control slot is transmitted always periodically from each of the indoor monitor master devices (200), and
wherein the transmitter (107) is configured to transmit the connection request to the indoor monitor master device (200) of the communication partner after taking the frame synchronization.

4. The lobby entrance slave device (100, 100A) of Claim 2,
wherein the controller (116) is configured to generate an interrupt signal with the input of the signal indicating the called destination indoor monitor master device (200) as a trigger,
wherein the transmitter (107) is configured to transmit the interrupt signal to the indoor monitor master device (200) of the communication partner, and
wherein the downlink control slot is transmitted from the indoor monitor master device (200) which has received the interrupt signal.

5. The lobby entrance slave device (100, 100A) of any of Claims 2 to 4,
wherein the controller (116) is configured to perform inversion detection of the two-wire cable between the indoor monitor master device (200) of the communication partner and the controller (116), and the lobby entrance slave device (100, 100A) further comprises:
a data inverter (109, 112) that is configured to invert polarity of at least one of received data and transmitted data in a case where the two-wire cable between the indoor monitor master device (200) of the communication partner and the controller (116) is reversely connected.

6. The lobby entrance slave device (100, 100A) of any of Claims 1 to 5,
wherein the controller (116) is configured to output a ringing tone from a speaker (103), with the input of the signal indicating the called destination indoor monitor master device (200) as a trigger.

7. The lobby entrance slave device (100, 100A) of any of Claims 1 to 6,
wherein the controller (116) is configured to cause a display (115) to display message information indicating a room number that corresponds to the called destination indoor monitor master device.

8. The lobby entrance slave device (100, 100A) of any of Claims 1 to 7,
wherein, in a case where it is not possible to capture connection request confirmation from the indoor monitor master device (200) of the communication partner even when a certain period of time has elapsed after transmitting the connection request, the controller (116) is configured to cause the display to display a message for urging retry of the input of the signal indicating the called destination indoor monitor master device (200).

9. The lobby entrance slave device (100, 100A) of any of Claims 1 to 8, further comprising:
wherein the indoor monitor master device (200) and the lobby entrance slave device (100, 100A) respectively are configured to generate a communication clock that corresponds to a bit rate of the digital communication generated with reference to an oscillation frequency of an internal crystal oscillator (136), and the lobby entrance slave device (100, 100A) further comprises:
a crystal oscillator (136) that is configured to output a voltage amplitude signal of the oscillation frequency, and
a crystal oscillation frequency controller (135) that is configured to adjust the oscillation frequency of the crystal oscillator (136) so as to reduce a time difference between a first time occupied by a prescribed data number transmitted from the indoor monitor master device (200) with reference to the communication clock of the indoor monitor master device (200) and a second time that corresponds to the prescribed data number counted by the communication clock on the lobby entrance slave device (100, 100A) side, by using measurement clock generated with reference to the oscillation frequency, and
wherein the crystal oscillation frequency controller (135)
is configured to store a set value which is set in a register for each of the indoor monitor master devices (200) to a memory and corresponds to the oscillation frequency of the crystal oscillator (136) adjusted during a previous call, and
is configured to set the set value which is stored in the memory and corresponds to the indoor monitor master device (200) of the communication partner in the register, in a case of inputting the signal indicating the called destination indoor monitor master device.

10. The lobby entrance slave device (100A) of any of Claims 1 to 9, further comprising:
a voltage detector (164-1, 164-2) that is configured to detect a voltage which is a potential difference between a first DC potential and a second DC potential respectively overlapping the two-wire cable from the indoor monitor master device (200), when a trigger for requesting monitoring by a camera (106) of the lobby entrance slave device (100A) is input from the indoor monitor master device (200),
wherein, in a case where the voltage detector (164-1, 164-2) detects a voltage that is equal to or higher than a threshold value, the controller (116) is configured to select the indoor monitor master device (200) which supplies the voltage that is equal to or higher than the threshold value as a communication partner.

11. A door phone system (1) for a multi-dwelling house in which the lobby entrance slave device (100, 100A) according to claim 1 is configured to perform digital communication with each of a plurality of indoor monitor master devices (200) via a two-wire cable wired in a star shape,
wherein the lobby entrance slave device (100, 100A) is configured
to open a communication path with a called destination indoor monitor master device (200) in a case where a signal indicating the called destination indoor monitor master device (200) is input, and
to start synchronous communication between the lobby entrance slave device (100, 100A) and the called destination indoor monitor master device (200).

12. The door phone system (1) of Claim 11,
wherein at least one of all of the plurality of indoor monitor master devices (200) and the lobby entrance slave devices (100, 100A) include
a controller (116) that is configured to perform inversion detection of the two-wire cable between the communication partner and the controller (116), and
a data inverter (109, 112) that is configured to invert polarity of at least one of received data and transmitted data in a case where the two-wire cable between the communication partner and the controller (116) is reversely connected.

13. The door phone system (1) of Claim 11,
wherein all of the plurality of indoor monitor master devices (200) and the lobby entrance slave device (100, 100A) include
a received data processor (113, 213) that is configured to decode the received data, and
a polarity setter (117, 217) that is configured to perform inversion detection of the two-wire cable using a sync pattern that is included in decode data and is a known data sequence, and to invert the decode data after the sync pattern in a case where it is determined that the two-wire cable is reversely connected.

14. The door phone system (1) of Claim 11,
wherein each of the indoor monitor master devices (200) is configured
to transmit a downlink control slot always periodically in a state where a power source is on,
wherein the lobby entrance slave device (100, 100A) is configured
to block a communication path with the indoor monitor master device (200) other than the called destination, and to terminate a part between two signal lines linked to the two-wire cable of the indoor monitor master device (200) other than the called destination in a floating state by a termination resistor,
to take frame synchronization by using the downlink control slot from the called destination indoor monitor master device (200), and
to transmit the connection request to the called destination indoor monitor master device (200) after taking the frame synchronization.

15. A communication method of a door phone system (1) for a multi-dwelling house in which the lobby entrance slave device (100, 100A) according to claim 1 performs digital communication with each of a plurality of indoor monitor master devices (200) via a two-wire cable wired in a star shape, the method comprising:
by the lobby entrance slave device (100, 100A),
opening a communication path with a called destination indoor monitor master device (200) in a case where a signal indicating the called destination indoor monitor master device (200) is input; and
starting synchronous communication between the lobby entrance slave device (100, 100A) and the called destination indoor monitor master device.

## Patentansprüche

1. Lobbyeingangsslave-Vorrichtung (100, 100A) eines Türsprechsystems (1) für ein Mehrparteienhaus, die ausgestaltet ist, digitale Kommunikation mit jeder von mehreren Innenmonitormaster-Vorrichtungen (200) durchzuführen, mit:
mehreren Anschlüssen (T12-1, T12-2, T12-3, T12-4), die jeweils mit einer der mehreren Innenmonitormaster-Vorrichtungen (200) über ein in einer Stern-Form verdrahtetes Zwei-Draht-Kabel verbunden sind,
einer Steuereinheit (116), die ausgestaltet ist, eine angerufene Zielinnenmonitormaster-Vorrichtung (200) als einen Kommunikationspartner in einem Fall des Eingebens eines Signals auszuwählen, das die angerufene Zielinnenmonitormaster-Vorrichtung angibt, und eine Verbindungsanforderung zu erzeugen,
einen Kabelauswahlverbinder (101, 101A), der gemäß der Auswahl der Steuereinheit (116) mit dem Anschluss (T12-1, T12-2, T12-3, T12-4) zu verbinden ist, der mit der Innenmonitormaster-Vorrichtung (200) des Kommunikationspartners verbunden ist, und
einen Übermittler (107), der ausgestaltet ist, die Verbindungsanforderung über den Kabelauswahlverbinder (100, 101A) und das Zwei-Draht-Kabel an die Innenmonitormaster-Vorrichtung (200) des Kommunikationspartners zu übermitteln.

2. Lobbyeingangsslave-Vorrichtung (100, 100A) nach Anspruch 1,
wobei die Steuereinheit (116) ausgestaltet ist, eine Frame-Synchronisation unter Verwendung eines Downlink-Steuerslots von der Innenmonitormaster-Vorrichtung (200) des Kommunikationspartners vorzunehmen.

3. Lobbyeingangsslave-Vorrichtung (100, 100A) nach Anspruch 2,
wobei der Downlink-Steuerslot immer periodisch von jeder der Innenmonitormaster-Vorrichtungen (200) übermittelt wird, und
wobei der Übermittler (107) ausgestaltet ist, die Verbindungsanforderung nach dem Vornehmen der Frame-Synchronisation an die Innenmonitormaster-Vorrichtung (200) des Kommunikationspartners zu übermitteln.

4. Lobbyeingangsslave-Vorrichtung (100, 100A) nach Anspruch 2,
wobei die Steuereinheit (116) ausgestaltet ist, mit der Eingabe des Signals als einem Auslöser, das die angerufene Zielinnenmonitormaster-Vorrichtung (200) angibt, ein Unterbrechungssignal zu erzeugen,
wobei der Übermittler (107) ausgestaltet ist, das Unterbrechungssignal an die Innenmonitormaster-Vorrichtung (200) des Kommunikationspartners zu übermitteln, und
wobei der Downlink-Steuerslot von der Innenmonitormaster-Vorrichtung (200) übermittelt wird, die das Unterbrechungssignal empfangen hat.

5. Lobbyeingangsslave-Vorrichtung (100, 100A) nach einem der Ansprüche 2 bis 4,
wobei die Steuereinheit (116) ausgestaltet ist, eine Inversionserfassung des Zwei-Draht-Kabels zwischen der Innenmonitormaster-Vorrichtung (200) des Kommunikationspartners und der Steuereinheit (116) durchzuführen, und die Lobbyeingangsslave-Vorrichtung (100, 100A) ferner umfasst:
einen Dateninvertierer (109, 112), der ausgestaltet ist, eine Polarität von empfangenen Daten und/oder übermittelten Daten in einem Fall zu invertieren, bei dem das Zwei-Draht-Kabel zwischen der Innenmonitormaster-Vorrichtung (200) des Kommunikationspartners und der Steuereinheit (116) umgekehrt verbunden ist.

6. Lobbyeingangsslave-Vorrichtung (100, 100A) nach einem der Ansprüche 1 bis 5, wobei die Steuereinheit (116) ausgestaltet ist, mit der Eingabe des Signals als einem Auslöser, das die angerufene Zielinnenmonitormaster-Vorrichtung (200) angibt, einen Anrufton von einem Lautsprecher (113) auszugeben.

7. Lobbyeingangsslave-Vorrichtung (100, 100A) nach einem der Ansprüche 1 bis 6,
wobei die Steuereinheit (116) ausgestaltet ist, eine Anzeige (115) zu veranlassen, eine Nachrichtsinformation anzuzeigen, die eine Raumnummer angibt, die der angerufenen Zielinnenmonitormaster-Vorrichtung entspricht.

8. Lobbyeingangsslave-Vorrichtung (100, 100A) nach einem der Ansprüche 1 bis 7,
wobei in einem Fall, bei dem es auch nach dem Ablaufen einer bestimmten Zeitdauer nach einem Übermitteln der Verbindungsanforderung nicht möglich ist, eine Verbindungsanforderungsbestätigung von der Innenmonitormaster-Vorrichtung (200) des Kommunikationspartners zu empfangen, die Steuereinheit (116) ausgestaltet ist, die Anzeige zu veranlassen, eine Nachricht zum Drängen auf ein erneutes Versuchen der Eingabe des Signals anzuzeigen, das die angerufene Zielinnenmonitormaster-Vorrichtung (200) angibt.

9. Lobbyeingangsslave-Vorrichtung (100, 100A) nach einem der Ansprüche 1 bis 8, ferner mit:
wobei die Innenmonitormaster-Vorrichtung (200) und die Lobbyeingangsslave-Vorrichtung (100, 100A) jeweils ausgestaltet sind, einen Kommunikationstakt zu erzeugen, der einer Bitrate der digitalen Kommunikation entspricht, der unter Bezugnahme auf eine Oszillationsfrequenz eines internen Kristalloszillators (136) erzeugt ist, und die Lobbyeingangsslave-Vorrichtung (100, 100A) ferner umfasst:
einen Kristalloszillator (136), der ausgestaltet ist, ein Spannungsamplitudensignal der Oszillationsfrequenz auszugeben, und
eine Kristalloszillationsfrequenzsteuereinheit (135), die ausgestaltet ist. unter Verwendung eines Messtaktes, der unter Bezugnahme auf die Oszillationsfrequenz erzeugt wird, die Oszillationsfrequenz des Kristalloszillators (136) zu justieren, um eine Zeitdifferenz zwischen einer ersten Zeit, die durch eine vorgeschriebene Datenzahl eingenommen ist, die von der Innenmonitormaster-Vorrichtung (200) unter Bezugnahme auf den Kommunikationstakt der Innenmonitormaster-Vorrichtung (200) übermittelt wird, und einer zweiten Zeit zu reduzieren, die der vorgeschriebenen, durch den Kommunikationstakt auf der Seite der Lobbyeingangsslave-Vorrichtung (100, 100A) gezählten Datenzahl entspricht, und
wobei die Kristalloszillationsfrequenzsteuereinheit (135)
ausgestaltet ist, einen Einstellwert in einem Speicher zu speichern, der in einem Register für jede der Innenmonitormaster-Vorrichtungen (200) eingestellt ist und der Oszillationsfrequenz des Kristalloszillators (136) entspricht, die während eines vorherigen Anrufs angepasst wurde, und
ausgestaltet ist, in einem Fall des Eingebens des Signals, das die angerufene Zielinnenmonitormaster-Vorrichtung angibt, den Einstellwert einzustellen, der in dem Speicher gespeichert ist und der der Innenmonitormaster-Vorrichtung (200) des Kommunikationspartners in dem Register entspricht.

10. Lobbyeingangsslave-Vorrichtung (100A) nach einem der Ansprüche 1 bis 9, ferner mit:
einem Spannungsdetektor (164-1, 164-2), der ausgestaltet ist, eine Spannung zu erfassen, die eine Potentialdifferenz zwischen einem ersten Gleichspannungspotential und einem zweiten Gleichspannungspotential ist, die jeweils das Zwei-Draht-Kabel von der Innenmonitormaster-Vorrichtung (200) überlappen, wenn ein Auslöser zum Anfordern einer Überwachung durch eine Kamera (106) der Lobbyeingangsslave-Vorrichtung (100A) von der Innenmonitormaster-Vorrichtung (200) eingegeben wird,
wobei, in einem Fall, bei dem der Spannungsdetektor (164-1, 164-2) eine Spannung erfasst, die gleich oder höher als ein Schwellenwert ist, die Steuereinheit (116) ausgestaltet ist, die Innenmonitormaster-Vorrichtung (200) als einen Kommunikationspartner auszuwählen, die die Spannung bereitstellt, die gleich oder höher als der Schwellenwert ist.

11. Türsprechsystem (1) für ein Mehrparteienhaus, in dem die Lobbyeingangsslave-Vorrichtung (100, 100A) nach Anspruch 1 ausgestaltet ist, digitale Kommunikation mit jeder von mehreren Innenmonitormaster-Vorrichtungen (200) über ein in einer Stern-Form verdrahtetes Zwei-Draht-Kabel durchzuführen,
wobei die Lobbyeingangsslave-Vorrichtung (100, 100A) ausgestaltet ist,
einen Kommunikationspfad mit einer angerufenen Zielinnenmonitormaster-Vorrichtung (200) in einem Fall zu öffnen, bei dem ein Signal eingebeben wird, das die angerufene Zielinnenmonitormaster-Vorrichtung (200) angibt, und
eine synchrone Kommunikation zwischen der Lobbyeingangsslave-Vorrichtung (100, 100A) und der angerufenen Zielinnenmonitormaster-Vorrichtung (200) zu starten.

12. Türsprechsystem (1) nach Anspruch 11,
wobei wenigstens eine von allen der mehreren Innenmonitormaster-Vorrichtungen (200) und die Lobbyeingangsslave-Vorrichtungen (100, 100A) umfassen:
eine Steuereinheit (116), die ausgestaltet ist, eine Inversionserfassung des Zwei-Draht-Kabels zwischen dem Kommunikationspartner und der Steuereinheit (316) zu durchzuführen, und
einen Dateninvertierer (109, 112), der ausgestaltet ist, eine Polarität von empfangenen Daten und/oder übermittelten Daten in einem Fall zu invertieren, bei dem das Zwei-Draht-Kabel zwischen dem Kommunikationspartner und der Steuereinheit (116) umgekehrt verbunden ist.

13. Türsprechsystem (1) nach Anspruch 11,
wobei alle der mehreren Innenmonitormaster-Vorrichtungen (200) und die Lobbyeingangsslave-Vorrichtung (100, 100A) umfassen:
einen Empfangsdatenprozessor (113, 213), der ausgestaltet ist, die empfangenen Daten zu dekodieren, und
einen Polaritätseinsteller (117, 217), der ausgestaltet ist, eine Inversionserfassung des Zwei-Draht-Kabels unter Verwendung eines Sync-Musters durchzuführen, das in den dekodierten Daten enthalten ist und das eine bekannte Datensequenz ist, und die dekodierten Daten nach dem Sync-Muster in einem Fall zu invertieren, bei dem bestimmt wird, dass das Zwei-Draht-Kabel umgekehrt verbunden ist.

14. Türsprechsystem (1) nach Anspruch 11,
wobei jede der Innenmonitormaster-Vorrichtung (200) ausgestaltet ist:
einen Downlink-Steuerslot immer periodisch in einem Zustand zu übermitteln, bei dem eine Energiequelle eingeschaltet ist,
wobei die Lobbyeingangsslave-Vorrichtung (100, 100A) ausgestaltet ist:
einen Kommunikationspfad mit der Innenmonitormaster-Vorrichtung (200) mit Ausnahme des angerufenen Ziels zu blockieren und einen Teil zwischen zwei Signalleitungen in einem potentialfreien Zustand durch einen Terminierungswiderstand zu terminieren, der mit dem Zwei-Draht-Kabel der Innenmonitormaster-Vorrichtung (200) außer dem angerufenen Ziel verbunden ist,
eine Frame-Synchronisation unter Verwendung des Downlink-Steuerslots von der angerufenen Zielinnenmonitormaster-Vorrichtung (200) vorzunehmen, und
die Verbindungsanforderung an die angerufene Zielinnenmonitormaster-Vorrichtung (200) nach Vornehmen der Frame-Synchronisation zu übermitteln.

15. Kommunikationsverfahren eines Türsprechsystems (1) für ein Mehrparteienhaus, bei dem die Lobbyeingangsslave-Vorrichtung (100, 100A) nach Anspruch 1 eine digitale Kommunikation mit jeder von mehreren Innenmonitormaster-Vorrichtungen (200) über ein in einer Stern-Form verdrahtetes Zwei-Draht-Kabel durchführt, wobei das Verfahren von der Lobbyeingangsslave-Vorrichtung (100, 100A) ausgeführt umfasst:
Öffnen eines Kommunikationspfades mit einer angerufenen Zielinnenmonitormaster-Vorrichtung (200) in einem Fall, bei dem ein Signal eingegeben wird, das die angerufene Zielinnenmonitormaster-Vorrichtung (200) angibt, und
Starten einer synchronen Kommunikation zwischen der Lobbyeingangsslave-Vorrichtung (100, 100A) und der angerufenen Zielinnenmonitormaster-Vorrichtung.

## Revendications

1. Dispositif esclave d'entrée de hall (100, 100A) d'un système de portier téléphonique (1) pour une maison à logements multiples, qui est configuré pour effectuer de la communication numérique avec chacun d'une pluralité de dispositifs maîtres de moniteur intérieur (200), comprenant:
une pluralité de bornes (T12-1, T12-2, T12-3, T12-4) qui sont connectées à l'un quelconque de la pluralité de dispositifs maîtres de moniteur intérieur (200) via un câble à deux fils câblé en étoile,
une unité de commande (116) qui est configurée pour sélectionner un dispositif maître de moniteur intérieur de destination appelé (200) en tant que partenaire de communication dans un cas de l'entrée d'un signal indiquant le dispositif maître de moniteur intérieur de destination appelé, et pour générer une demande de connexion,
un connecteur de sélection de câble (101, 101A) qui est à connecter, conformément à la sélection de l'unité de commande (116), à la borne (T12-1, T12-2, T12-3, T12-4) qui est connectée au dispositif maître de moniteur intérieur (200) du partenaire de communication, et
un transmetteur (107) qui est configuré pour transmettre la demande de connexion au dispositif maître de moniteur intérieur (200) du partenaire de communication via le connecteur de sélection de câble (101, 101A) et le câble à deux fils.

2. Dispositif esclave d'entrée de hall (100, 100A) selon la revendication 1,
dans lequel l'unité de commande (116) est configurée pour effectuer une synchronisation de trame en utilisant un slot de commande de liaison descendante du dispositif maître de moniteur intérieur (200) du partenaire de communication.

3. Dispositif esclave d'entrée de hall (100, 100A) selon la revendication 2,
dans lequel le slot de commande de liaison descendante est toujours transmise de manière périodique à partir de chacun des dispositifs maîtres de moniteur intérieur (200), et
dans lequel ledit transmetteur (107) est configuré pour transmettre la demande de connexion au dispositif maître de moniteur intérieur (200) du partenaire de communication après avoir effectué la synchronisation de trame.

4. Dispositif esclave d'entrée de hall (100, 100A) selon la revendication 2,
dans lequel l'unité de commande (116) est configurée pour générer un signal d'interruption avec l'entrée du signal en tant que déclencheur, qui indique le dispositif maître de moniteur intérieur de destination appelé (200),
dans lequel le transmetteur (107) est configuré pour transmettre le signal d'interruption au dispositif maître de moniteur intérieur (200) du partenaire de communication, et
dans lequel le slot de commande de liaison descendante est transmis depuis le dispositif maître de moniteur intérieur (200) qui a reçu le signal d'interruption.

5. Dispositif esclave d'entrée de hall (100, 100A) selon l'une quelconque des revendications 2 à 4,
dans lequel l'unité de commande (116) est configurée pour effectuer une détection d'inversion du câble à deux fils entre le dispositif maître de moniteur intérieur (200) du partenaire de communication et l'unité de commande (116), et le dispositif esclave d'entrée de hall (100, 100A) comprend en outre:
un inverseur de données (109, 112) qui est configuré pour inverser la polarité de données reçues et/ou de données transmises dans un cas où le câble à deux fils entre le dispositif maître de moniteur intérieur (200) du partenaire de communication et l'unité de commande (116) est connecté inversement.

6. Dispositif esclave d'entrée de hall (100, 100A) selon l'une quelconque des revendications 1 à 5,
dans lequel l'unité de commande (116) est configurée pour émettre une sonnerie d'appel depuis un haut-parleur (103), avec l'entrée du signal en tant que déclencheur, qui indique le dispositif maître de moniteur intérieur de destination appelé (200).

7. Dispositif esclave d'entrée de hall (100, 100A) selon l'une quelconque des revendications 1 à 6,
dans lequel ladite unité de commande (116) est configurée pour amener un affichage (115) à afficher une information de message indiquant un numéro de pièce qui correspond au dispositif maître de moniteur intérieur de destination appelé.

8. Dispositif esclave d'entrée de hall (100, 100A) selon l'une quelconque des revendications 1 à 7,
dans lequel, dans un cas où il n'est pas possible de recevoir une confirmation de demande de connexion en provenance du dispositif maître de moniteur intérieur (200) du partenaire de communication, même lorsqu'une certaine durée s'est écoulée après avoir transmis la demande de connexion, l'unité de commande (116) est configurée pour amener l'affichage à afficher un message pour exiger une nouvelle tentative de l'entrée du signal indiquant le dispositif maître de moniteur intérieur de destination (200) appelé.

9. Dispositif esclave d'entrée de hall (100, 100A) selon l'une quelconque des revendications 1 à 8, comprenant en outre:
dans lequel le dispositif maître de moniteur intérieur (200) et le dispositif esclave d'entrée de hall (100, 100A) sont configurés respectivement pour générer une horloge de communication qui correspond à un débit binaire de la communication numérique, générée en référence à une fréquence d'oscillation d'un oscillateur à cristal interne (136), et le dispositif esclave d'entrée de hall (100, 100A) comprend en outre:
un oscillateur à cristal (136) qui est configuré pour délivrer un signal d'amplitude de tension de la fréquence d'oscillation, et
une unité de commande de fréquence d'oscillation de cristal (135) qui est configurée pour ajuster, en utilisant une horloge de mesure générée en référence à la fréquence d'oscillation, la fréquence d'oscillation de l'oscillateur à cristal (136) de manière à réduire une différence de temps entre un premier temps occupé par un nombre de données prescrit transmis depuis le dispositif maître de moniteur intérieur (200) en référence à l'horloge de communication du dispositif maître de moniteur intérieur (200) et un deuxième temps qui correspond au nombre de données prescrit compté par l'horloge de communication du côté du dispositif esclave d'entrée de hall (100, 100A), et
dans lequel l'unité de commande de fréquence d'oscillation de cristal (135)
est configurée pour stocker dans une mémoire une valeur de consigne qui est établie dans un registre pour chacun des dispositifs maîtres de moniteur intérieur (200) et qui correspond à la fréquence d'oscillation de l'oscillateur à cristal (136) ajustée lors d'un appel précédent, et
est configurée pour régler la valeur de consigne qui est stockée dans la mémoire et qui correspond au dispositif maître de moniteur intérieur (200) du partenaire de communication dans le registre, dans un cas de l'entrée du signal indiquant le dispositif maître de moniteur intérieur de destination appelé.

10. Dispositif esclave d'entrée de hall (100A) selon l'une quelconque des revendications 1 à 9, comprenant en outre:
un détecteur de tension (164-1, 164-2) qui est configuré pour détecter une tension qui est une différence de potentiel entre un premier potentiel de tension continue et un deuxième potentiel de tension continue chevauchant respectivement le câble à deux fils du dispositif maître de moniteur intérieur (200), lorsqu'un déclencheur pour demander une surveillance par une caméra (106) du dispositif esclave d'entrée de hall (100A) est entré depuis le dispositif maître de moniteur intérieur (200),
dans lequel, dans un cas où le détecteur de tension (164-1, 164-2) détecte une tension qui est égale ou supérieure à une valeur de seuil, l'unité de commande (116) est configurée pour sélectionner le dispositif maître de moniteur intérieur (200) en tant que partenaire de communication, qui fournit la tension qui est égale ou supérieure à la valeur de seuil.

11. Système de portier téléphonique (1) pour une maison à logements multiples, dans lequel le dispositif esclave d'entrée de hall (100, 100A) selon la revendication 1 est configuré pour effectuer une communication numérique avec chacun d'une pluralité de dispositifs maîtres de moniteur intérieur (200) via un câble à deux fils câblé en étoile,
dans lequel le dispositif esclave d'entrée de hall (100, 100A) est configuré
pour ouvrir un chemin de communication avec un dispositif maître de moniteur intérieur de destination appelé (200) dans un cas où un signal indiquant le dispositif maître de moniteur intérieur de destination appelé (200) est entré, et
pour démarrer une communication synchrone entre le dispositif esclave d'entrée du hall (100, 100A) et le dispositif maître de moniteur intérieur de destination appelé (200).

12. Système de portier téléphonique (1) selon la revendication 11,
dans lequel l'un au moins de tous de la pluralité de dispositifs maîtres de moniteur intérieur (200) et les dispositifs esclaves d'entrée de hall (100, 100A) comprennent
une unité de commande (116) qui est configurée pour effectuer une détection d'inversion du câble à deux fils entre le partenaire de communication et l'unité de commande (116), et
un inverseur de données (109, 112) qui est configuré pour inverser une polarité de données reçues et/ou de données transmises dans un cas où le câble à deux fils entre le partenaire de communication et l'unité de commande (116) est connecté inversement.

13. Système de portier téléphonique (1) selon la revendication 11,
dans lequel tous de la pluralité de dispositifs maîtres de moniteur intérieur (200) et le dispositif esclave d'entrée de hall (100, 100A) comprennent
un processeur de données reçues (113, 213) qui est configuré pour décoder les données reçues, et
un dispositif de réglage de polarité (117, 217) qui est configuré pour effectuer une détection d'inversion du câble à deux fils en utilisant un motif de synchronisation qui est inclus dans les données décodées et est une séquence de données connue, et pour inverser les données décodées après le motif de synchronisation dans un cas où il est déterminé que le câble à deux fils est connecté inversement.

14. Système de portier téléphonique (1) selon la revendication 11,
dans lequel chacun des dispositifs maîtres de moniteur intérieur (200) est configuré
pour transmettre un slot de commande de liaison descendante toujours périodiquement dans un état où une source d'énergie est allumée,
dans lequel le dispositif esclave d'entrée de hall (100, 100A) est configuré
pour bloquer un chemin de communication avec le dispositif maître de moniteur intérieur (200) sauf la destination appelée, et pour terminer par une résistance de terminaison, dans un état exempt de potentiel, une partie entre deux lignes de signal qui est reliée au câble à deux fils du dispositif maître de moniteur intérieur (200) sauf la destination appelée,
pour effectuer une synchronisation de trame en utilisant le slot de commande de liaison descendante du dispositif maître de moniteur intérieur de destination appelé (200), et
pour transmettre la demande de connexion au dispositif maître de moniteur intérieur de destination appelé (200) après avoir effectué la synchronisation de trame.

15. Procédé de communication d'un système de portier téléphonique (1) pour une maison à logements multiples, dans lequel le dispositif esclave d'entrée de hall (100, 100A) selon la revendication 1 effectue une communication numérique avec chacun d'une pluralité de dispositifs maîtres de moniteur intérieur (200) via un câble à deux fils câblé en étoile, le procédé comprenant,
mis en œuvre par le dispositif esclave d'entrée de hall (100, 100A):
ouvrir un chemin de communication avec un dispositif maître de moniteur intérieur de destination appelé (200) dans un cas où un signal indiquant le dispositif maître de moniteur intérieur de destination appelé (200) est entré, et
démarrer une communication synchrone entre le dispositif esclave d'entrée du hall (100, 100A) et le dispositif maître de moniteur intérieur de destination appelé.
